## Europäisches Patentamt

## European Patent Office

## Office européen des brevets

(19)

(11) Veröffentlichungsnummer: **0 221 574**

**B1**

(12) **EUROPÄISCHE PATENTSCHRIFT**

(45) Veröffentlichungstag der Patentschrift: **01.08.90**

(51) Int. Cl.⁵: **H 02 M 5/293**

(21) Anmeldenummer: **86115480.5**

(22) Anmeldetag: **07.11.86**

(54) Schaltungsanordnung für einen pulsgesteuerten Wechselstromsteller.

(30) Priorität: **08.11.85 DE 3539646**
**08.11.85 DE 3539647**

(43) Veröffentlichungstag der Anmeldung:
**13.05.87 Patentblatt 87/20**

(45) Bekanntmachung des Hinweises auf die
Patenterteilung:
**01.08.90 Patentblatt 90/31**

(84) Benannte Vertragsstaaten:
**AT BE CH DE ES FR GB GR IT LI LU NL SE**

(56) Entgegenhaltungen:

**TECHNICAL DEVELOPMENTS, Band 2, Januar
1982, Seiten 40-41, Motorola Inc., Schaumburg,
III., US; T.L. HOPKINS: "AC freewheeling diodes"**

(73) Patentinhaber: **Asea Brown Boveri
Aktiengesellschaft
Kallstadter Strasse 1
D-6800 Mannheim-Käfertal (DE)**

(72) Erfinder: **Venema, Tjeerd
Battenweg 9
NL-6051 AD Maasbracht (NL)**

(74) Vertreter: **Kempe, Wolfgang, Dr. et al
c/o BROWN, BOVERI & CIE AG ZPT Postfach 351
D-6800 Mannheim 31 (DE)**

**Beschreibung**

Die Erfindung betrifft eine Schaltungsanordnung nach dem Oberbegriff des Anspruchs 1.

Um Wechselspannungsverbraucher steuern oder regeln zu können, werden elektronische Schaltungen angewandt, die den Laststrom getaktet schalten Der Pulsbetrieb, durch welchen die Laststromstellung erfolgt, kann hierbei z.B. mittels Pulsbreitensteuerung bei welcher die Pulsfrequenz konstarnt und das Tastverhältnis variabel ist oder, mittels Pulsfolgesteuerung, bei welcher die Pulsbreite konstant und die Pulsfrequenz variabel ist, erfolgen.

Das Schalten des Laststromes geschieht vorzugsweise mit einer Frequenz, die ein Vielfaches seiner Grundfrequenz beträgt. Wählt man eine Schaltfrequenz, die über der Hörschwelle liegt, können keine störenden Geräusche entstehen. Phasenpulsgesteuerte Wechselstromsteller gehören zum Stand der Technik (vgl Prof. Dr. W. Keuter "Das Stellen und Schalten von Wechselgrößen", 1982 S.151 ff. Hüthig Verlag Heidelberg; Prof. Dr. H. Moczala u.a.". "Elektrische Kleinstmotoren und ihr Einsatz", 1979, Seite 167, 168 Expert-Verlag, Grafenau).

Aus der Firmendruckschrift Technical Developments, Band 2, Januar 1982, S. 40-41, Motorola Inc., Schaumburg, Ill., USA; T. L. Hopkins: "AC Freewheeling Diodes" ist ein Transistor-Wechselstromsteller für eine Wechselstromlast bekannt, welcher als Laststromschaltmittel einen mit seinen Wechselspannungsanschlüssen in Serie zur Wechselstromlast liegenden ungesteuerten Dioden-Brückengleichrichter und einen mittels Pulsbreitensteuerung gesteuerten Transistor aufweist, der mit seiner Schaltstrecke den Gleichspannungszweig des Dioden-Brückengleichrichters überbrückt. Parallel zur Wechselstromlast sind zwei mittels Freilaufschaltmittel abhängig vom Netzwechselspannungsnulldurchgang alternierend steuerbare antiparallele Freilaufzweige vorgesehen, wobei während der positiven Halbwelle der Netzwechselspannung der mit einer seriengeschalteten ersten Diode und einem ersten Thyristor bestückte erste Freilaufzweig leitet und der mit einer seriengeschalteten zweiten Diode und einem zweiten Thyristor bestückte zweite Freilaufzweig sperrt und wobei während der negativen Halbwelle der Netzwechselspannung der erste Freilaufzweig sperrt und der zweite Freilaufzweig leitet.

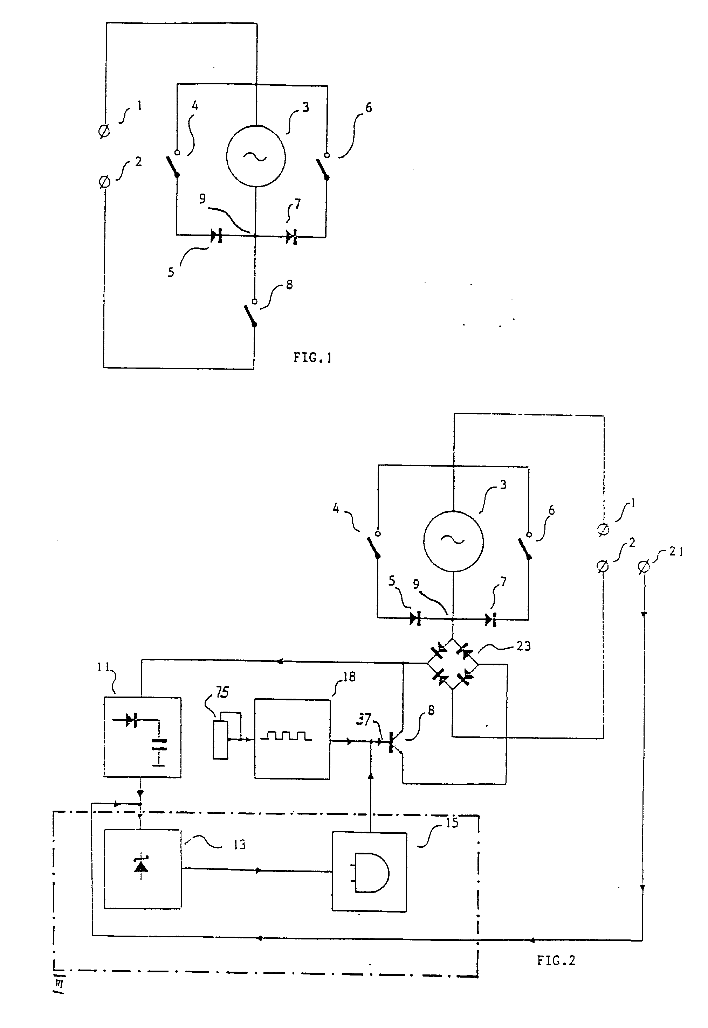

Der phasenpulsgesteuerte Transistorwechselstromsteller nach Prof. Dr. W. Keuter (a.a.O.) verwendet zum Schutz des Transistors vor Induktionsspannungsspitzen und zur Rückspeisung induktiver Energie ein gesteuertes Freilaufnetzwerk, das Parallel zur Last angeordnet ist. Ein Prinzipschaltbild ist in Fig. 1 wiedergegeben. Eine aus ohmschem und induktivem Anteil bestehende Wechselstromlast 3 liegt an den Wechselspannungsanschlußklemmen 1, 2. Durch ein zwischengeschaltetes Laststromschaltmittel 8, gegebenenfalls einen Transistorsteller kann der Laststrom gestellt werden, indem das Tastverhältnis der Steuerpulse über ein Stellglied verändert wird. Die Pulsfrequenz ist wesentlich höher als die Frequenz der eingespeisten Wechselspannung, mehr als doppelt so hoch. Damit kein hörbares Geräusch entsteht, wird vorzugsweise eine Frequenz über 16 kHz verwendet.

Probleme ergeben sich durch Induktionsspannungen, die an der Wechselstromlast 3, z.B. Motoren oder Transformatoren, entstehen, wenn das Laststromschaltmittel 8 geöffmen wird. Die Induktionsspannung kann ohne Zusatamaßnahmen nicht abgebaut werden, so daß induktine Leistungsverluste und für Halbleiter gefährliche Störspannungen auftreten. Das Problem läßt sich dadurch teilweise lösen, daß parallel zur induktiven Wechselstromlast 3 Freilaufzweige mit gesteuerten Freilaufschaltmitteln, z.B. Thyristoren geschaltet werden. In Figur 1 sind die üblicherweise verwendeten Thyristoren vereinfacht jeweils als Freilaufschalter und Freilaufdiode dargestellt. Wenn die Freilaufschalter 4, 6 wechselnd im richtigen Zyklus der speisendern Wechselspannung schließen oder öffnen, wird die induktive Energie, die beim Schalten des Laststromschaltmittels 8 entsteht, der Wechselstromlast 3 wieder zugeführt.

Nimmt man an, daß die angelegte Wechselspannung an der Anschlußklemme 1 positiv gegenüber der Anschlußklemme 2 ist, so muß der zweite Freilaufschalter 6 geschlossen und der erste Freilaufschalter 4 geöffnet sein. Wenn das Laststromschaltmittel 8, z.B. während einer positiven Halbwelle öffnet, wird sich bei jedem Öffnungsvorgang am Stromknotenpunkt 9 ein positives Induktionspotential bilden, welches aber über die zweite Freilaufdiode 7 und den zweiten Freilaufschalter 6 an die Wechselstromlast 3 rückgeführt wird und somit der Wechselstromlast 3 in Form von Energie wieder zugute kommt. Entsprechendes gilt während der anderen Periodenhälfte der angelegten Wechselspannung, bei welcher die Wechselspannungsanschlußklemme 2 positiv gegenüber der Wechselspannungsanschlußklemme 1 ist. In diesem Fall muß der zweite Freilaufschalter 6 geöffnet sowie der erste Freilaufschalter 4 geschlossen sein.

Die Folge dieser Rückspeisung durch das, abhängig vom Spannungsnulldurchgang, wechselnde Schließen der Freilaufschalter 4, 6 ist, daß induktive Schaltverluste auf ein Minimum reduziert sind. Sie bestehen im Grunde nur noch aus Übergangsverlusten der Freilaufschaltmittel 4, 5; 6, 7. Selbstverständlich dürfen die jeweiligen Freilaufschaltmittel 4, 5 ; 6, 7 niemals in der falschen Zyklushälfte geschlossen sein, da andernfalls der Netzstrom über den geschlossenen Freilaufzweig fließen könnte und somit ein Kurzschluß entstände.

Ein Mangel der bekannten Schaltungsanordnung ist jedoch, daß die beschriebene Induktionsstromrückspeisung über die Freilaufschalter 4, 6 nur in Abhängigkeit von den Spannungsnulldurchgängen der angelegten Wechselspannung erfolgt. Bedingt durch die Tatsache, daß der Strom bei einer induktiven Last gegenüber der Spannung zeitlich nachläuft, folgt, daß nach jedem Spannungsnulldurchgang noch immer ein Strom durch die Wechselstromlast 3, und zwar entgegengesetzt zur vorliegenden Spannung, fließt. In diesem durch die induktive Phasenverschiebung bedingten Bereich kann über die Freilaufschalter 4, 6 keine induktive Energie rückgeführt werden, weil die Polarität nicht mit derjenigen der jeweiligen Freilaufdiode 5, 7 übereinstimmt. Somit ist festzustellen, daß bei einer induktiven Last im Strom/Zeit-Diagramm bzw. Spannung/Zeit-Diagramm zwischen gegenpoligen und gleichpoligen Bereichen von Strom und Spannung unterschieden werden muß. Der gegenpolige Bereich ist durch die Zeit zwischen einem Spannungsnulldurchgang und dem Nulldurchgang des nachfolgenden, der Spannung nacheilenden Stroms gekennzeichnet. Die bekannte Schaltungsanordnung vermag nur in den sogenannten gleichpoligen Bereichen, wo also Strom und Spannung beide jeweils positiv oder jeweils negativ sind, die induktive Energie an die Wechselstromlast 3 zurückzuführen. In den sogenannten gegenpoligen U-I-Bereichen treten jedoch störende Induktionsspannungsimpulse auf, die besonders dU/dt-empfundlichen Halbleitern sehr gefährlich werden können.

Der vorliegenden Erfindung, liegt daher die Aufgabe zugrunde, eine Schaltungsanordnung der im Oberbegriff des Anspruchs 1 genannten Gattung zu schaffen, mit der es gelingt, bei Wechselstromlast mit induktivem Anteil besonders die in der Zeit zwischen einem Spannungsnulldurchgang und einem Nulldurchgang des nachfolgenden Stroms entstehenden Störspannungen auf ein Minimum zu reduzieren.

Die Aufgabe wird erfindungsgemäß durch die im Kennzeichnungsteil des Anspruchs 1 genannten Merkmale gelöst. Vorteilhafte konstruktive Ausführungsformen der Erfindung sind in den Unteransprüchen beschrieben.

Das Laststromschaltmittel soll durch eine Halteschaltung mindestens in der Zeit, $\phi_x$ in welcher Induktionsspannungsimpulse auftreten, welche die Funktionsfähigkeit dU/dt-empfindlicher Bauelemente und damit der gesamten Schaltungsanordnung gefährden können, ständig geöffnet oder ständig geschlossen bleiben.

Aus Sicherheitsgründen wird das Laststromschaltmittel mindestens in der Zeit zwischen jedem Spannungsnulldurchgang und dem Nulldurchgang des nachfolgenden Stroms entweder ständig geöffnet oder aber ständig geschlossen halten. In dieser Zeit kann keine Phasenpulsansteuerung des Laststromschaltmittels erfolgen und somit können auch keine Induktionsspannungspitzen durch Ausschaltvorgänge entstehen. Durch den Wegfall der Induktionsspannungsspitzen ist es möglich, als Freilaufschaltmittel billige Halbleiterschalter zu verwenden. Da billige Halbleiterschalter, wie z.B. Thyristoren oder Triacs jedoch dU/dt-empfindliche Bauteile sind, könnten steile Schaltflanken im falschen Augenblick zur Zündung führen. Ohne die erfindungsgemäßen Maßnahmen würde somit die elektronische Schaltungsanordnung unzulässig beeinflußt oder sogar zerstört werden können, oder man müßte teurere Transistoren verwenden.

Ein Ausführungsbeispiel soll im folgeden anhand der Zeichnung näher beschrieben und erläutert werden.

Es zeigen:

Fig. 1 Das Prinzipschaltbild eines bekannten (Keuter a.a.0.) Wechselstromstellers mit Freilaufzweigen.

Fig. 2 das Prinzipschaltbild des erfindungsgemäßen Wechselstromstellers mit Halteschaltung und schematisiertem Freilaufnetzwerk,

Fig. 3 U(t)-Diagramme verschiedener an der Halteschaltung anstehender Signale,

Fig. 4 ein Ausführungsbeispiel eines Freilaufnetzwerks des erfindungsgemäßen Wechselstromstellers mit Triac (4, 6)-Ansteuerschaltung,

Fig. 5 den Phasenverlauf von Spannung und Strom bei einer Last mit induktivem Anteil,

Fig. 6 das Ausblenden der Steuerimpulse im kritischen gegenpoligen U-I-Bereich,

Fig. 7 ein weiteres Ausführungsbeispiel eines Freilaufnetzwerks gemäß Figur 4, jedoch mit erheblich verlustleistungsreduzierter Triac (4, 6)-Ansteuerschaltung,

Fig. 8 das prinzipschaltbild des erfindungsgemäßen Wechselstromstellers gemäß Figur 2, jedoch mit automatischer cos φ -Anpassung,

Fig. 9 ein Ausführungsbeispiel einer Halteschaltung mit automatischer cos φ -Anpassung,

Fig. 10 das Prinzipschaltbild einer Schaltungsanordnung zum Schutz eines als Schaltregler arbeitenden pulsgesteuerten Halbleiterschalters gegen Überlastung und Kurzschluß,

Fig. 11 ein Ausführungsbeispiel der Schutzschaltungsanordnung gemäß Figur 10,

Fig. 12 ein weiteres Ausführungsbeispiel der Schutzschaltungsanordnung gemäß Figur 10, jedoch mit verbessertem Kurzschlußschutz.

Figur 1 zeigt das Prinzipschaltbild eines bekannten Wechselstromstellers, dessen Funktionsweise bereits vorstehend erläutert wurde.

Figur 2 zeigt ein Ausführungsbeispiel der erfindungsgemäßen Schaltungsanordnung, die auf der bekannten Schaltung nach Figur 1 aufbaut. Eine Wechselstromlast 3 mit induktivem Anteil ist über ein zwischengeschaltetes Laststromschaltmittel 23, 8 mit den Wechselspannungsanschlußklemmen 1, 2 einer Wechselspannungsquelle verbunden. Das Laststromschaltmittel 23, 8 besteht aus einem Brückengleichrichter 23 mit ungesteuerten Brückenzweigen, der mit seinen Wechselstromanschlüssen in Reihe zur Wechselstromlast 3 liegt und dessen Gleichstromanschlüsse über einen gesteuerten Halbleiterschalter 8, vorzugsweise die Emitter-Kollektor-Strecke eines Transistors, miteinander verbunden sind. Der Brückengleichrichter 23 wird zur Zweiwegschaltung von Wechselströmen benötigt, wenn als Schalter ein Halbleiterschalter dient, der, wie. z.B. übliche Transistoren, ein Einwegschalter ist. Das Laststromschaltmittel 23, 8 kann im Grundsatz aber durch einen während positiver und negativer Wechselspannungshalbwellen steuerbaren Zweiwegschalter ersetzt werden. An einer Steuerelektrode 37 des Halbleiterschalters 8 liegt ein Pulsgenerator 18, der eine oberhalb der Hörgrenze liegende Pulsfrequenz abgibt. Hierdurch wird der über die Schaltstrecke des Halbleiterschalters 8 fließende Laststrom abwechselnd gesperrt oder durchgelassen. Zur Steuerung des getakteten Laststroms wird vorzugsweise das Tastverhältnis der Impulse mit einem Stellglied, z.B. einem Stellpotentiometer 75, verändert.

Nach jedem Impuls des getakteten Laststroms entsteht eine Induktionsspannungsspitze, die sowohl empfindlichen Bauelementen des Wechselstromstellers, als auch anderen am Netz liegenden Verbrauchern gefährlich werden könnte. Zur Unterdrückung der Induktionsspannungen und einer Rückführung ihrer Energie an die Wechselstromlast 3, sind antiparallel zu dieser, alternierd steuerbare Freilaufzweige angeordnet. Jeder dieser Freilaufzweige besteht aus der jeweiligen Reihenschaltung einer Freilaufdiode 5, 7 und eines steuerbaren Freilaufschalters 4, 6. Die beiden Freilaufdioden 5, 7 sind antiparallel geschaltet, so daß im Zusammenwirken mit den beiden Freilaufschaltern 4, 6 der Freilaufzweig mit dem Freilaufschaltmittel 4, 5 während der positiven Halbwelle sperrt und der Freilaufzweig mit dem Freilaufschaltmittel 6, 7 leitet. Während der negativen Halbwelle der angelegten Wechselspannung gilt eine entsprechende Umkehrung. Insoweit wirkt die Schaltung nach Figur 2 entsprechend der bereits erläuterten Schaltung nach Figur 1.

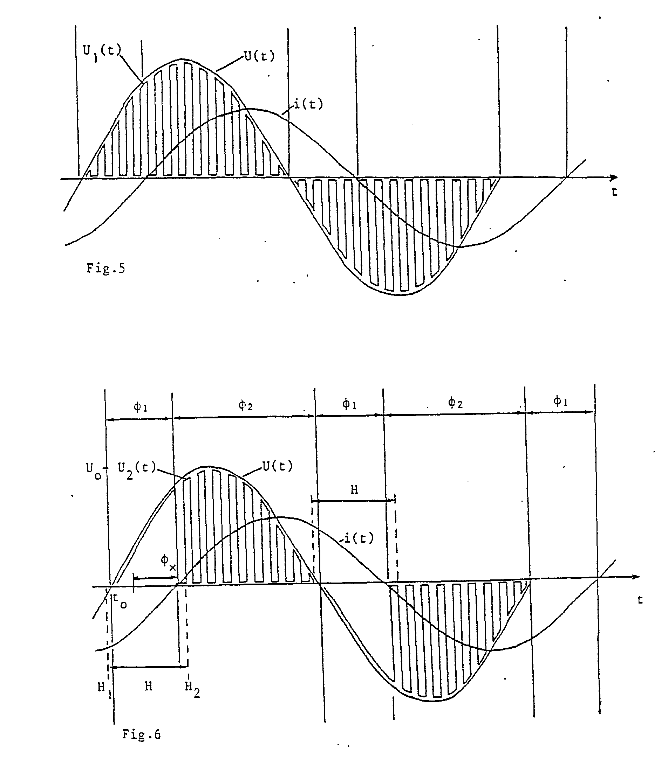

Die Figuren 5 und 6 verdeutlichen durch $U(t)$ bzw. $I(t)$ Diagramme die Verhältnisse in einem Lastkreis, dessen Wechselstromlast 3 einen induktiven Anteil besitzt, wie das z.B. bei Motoren und Transformatoren der Fall ist. Hierbei stellt $I(t)$ den gegenüber der Wechselspannung $U(t)$ phasenverschobenen Laststrom dar, solange kein Pulsbetrieb erfolgt. Während des kontinuierlichen Pulsbetriebes liegt eine getaktete Wechselspannung $U_1(t)$ vor, wie Fig. 5 zeigt.

Wenn jedoch während der Haltebereiche H der Pulsbetrieb unterbrochen wird, ergibt sich die unterbrochen getaktete Wechselspannung $U_2(t)$, gemäß Fig. 6.

Die gegenpoligen U-I-Bereiche sind mit $\phi_1$, die gleichpoligen U-I-Bereiche sind mit $\phi_2$ bezeichnet. $\phi_x$ stellt den kritischen gegenpoligen Bereich dar, in welchem Induktionsspannungsspitzen auf jeden Fall unterdrückt werden müssen. Während es mit der bekannten Schaltung nach Figur 1 gelingt, die durch die Schaltimpulse erzeugten Induktionsspannungsimpulse in den Bereichen $\phi_2$, also in Bereichen gleicher Polarität von Strom und Spannung, über die Freilaufzweige unschädlich zu machen, bleiben in den Bereichen $\phi_1$ in welchen Strom und Spannung gegenpolig verlaufen, Induktionsspannungsimpulse bestehen, die von den Freilaufzweigen nicht abgeleitet werden können. Die Erfindung geht nun von der Überlegung aus, mindestens in den kritischen gegenpoligen Bereichen $\phi_x$, vorzugsweise aber im gesamtem gegenpoligen Bereich $\phi_1$ ein Takten der

Wechselspannung durch die Steuerimpulse zu verhindern.

Erfindungsgemäß ist hierzu eine Halteschaltung 13, 15 vorgesehen, die entsprechend dem Beispiel nach Figur 2 einen Spannungsdetektor 13 und einen Impulsgeber 15 aufweist. Die gemeinsame Aufgabe des Spannungsdetekors 13 und des Impulsgebers 15 ist es, synchron mit der Wechselspannung einen Impuls zu erzeugen, der dem Steuerkreis des Halbleiterschalters 8 zugeführt werden kann und während der kritischen Bereiche $\phi_x$ die Steuerimpulse des Pulsgenerators 18 unterdrückt. Idealerweise muß die Unterdrückung zumindest solange erfolgen, daß in die gegenpoligen Bereiche von Spannung und Strom keine Impulse der getakteten Wechselspannung fallen, die zu Störungen führen könnten. In grober Näherung kann man sagen, daß der Halbleiterschalter 8 genau während der Phasenbereiche $\phi_1$ ständig geöffnet oder geschlossen bleiben muß.

Die den Beginn des Haltebereichs H kennzeichnende erste Haltebereichsgrenze $H_1$ kann jedoch auch kurz vor oder kurz nach dem Nulldurchgang der Wechselspannung gelegt werden. Sie muß jedenfalls so bestimmt werden, daß keine störenden Induktionsspannungen oder Schaltflanken die Schaltungsanordnung beeinflussen können. Insbesondere bei der Verwendung dU/dt-empfindlicher Bauelemente muß durch geeignete Wahl der ersten Haltebereichsgrenze $H_1$ verhindert werden, daß diese auf steile Impulsflanken ansprechen und somit unzulässig beeinflußt bzw. ggf. sogar zerstört werden können.

In Sonderfällen ist es denkbar, daß auch eine kurz hinter dem Spannungsnulldurchgang einsetzende erste Haltebereichsgrenze $H_1$ zu keinen Störungen führt. Wenn z.B. ein Schaltspannungsimpuls nach dem Spannungsnulldurchgang über einen gewissen Phasenwinkel andauert, kann, bevor die Spannung wieder auf Null absinkt, auch kein Induktionsspannungsimpuls auftreten. Die erste Haltebereichsgrenze $H_1$ könnte somit zumindest auch in die Zeit dauer bis zum ersten Ausschaltvorgang in der neu beginnenden Halbwelle gelegt werden.

Aber selbst wenn die erste Haltebereichsgrenze $H_1$ erst nach einigen Schaltimpulsen einsetzt, ist es durchaus möglich, daß dU/dt-empfindliche Bauelemente, wie Thyristoren oder Triacs aufgrund der absoluten Höhe der Schaltimpuls- oder Induktionsspannungsimpulsflanken noch nicht beeinflußt werden, wobei festzuhalten ist, daß die bei Beginn einer neuen Spannungshalbwelle noch vergleichsweise großen Induktionsspannungsimpulse bis zum Stromnulldurchgangszeitpunkt immer kleiner werden.

Für die geeignete Dimensionierung der ersten Haltebereichsgrenze $H_1$ ist u. a. der Wechselspannungsscheitelwert $U_o$, die dU/dt-Empfindlichkeit verwendeter Bauelemente sowie die Pulsfrequenz maßgebend.

Die das Ende des Haltebereichs H definierende zweite Haltebereichsgrenze $H_2$ wird entsprechend dem cos $\varphi$ im Laststromkreis derart festgelegt, daß bei cos $\varphi = 1$ die zweite Haltebereichsgrenze

$H_2$ frühestens in den Nulldurchgang des Stroms fällt und bei kleiner werdendem cos φ sich nacheilend verschiebt. Bei bekanntem cos φ kann die zweite Haltebereichsgrenze $H_2$ fest dimensioniert sein, während bei sich änderndem cos φ ein Steuer- oder Regelkreis gebildet wird, der die Haltebereichsgrenze entsprechend dem cos φ verschiebt.

Im Normalfall wird man jedoch die Haltebereiche H größer als die gegenpoligen Bereiche $\phi_1$ wählen, um sicher zu gehen, daß keine Taktimpulse in den Bereich $\phi_1$ fallen und somit auch keine Induktionsspannungen entstehen können. So wird man die erste Haltebereichgrenze $H_1$ vor den Nulldurchgang der Wechselspannung oder spätestens in diesen legen. Die zweite Haltebereichsgrenze $H_2$ dagegen wird man frühestens in den folgenden Nulldurchgang des nacheilenden Wechselstromes oder kurz dahinter positionieren.

Um die Haltebereiche H zu realisieren, sind viele Schaltungen denkbar. Die in Figur 2 dargestellte Schaltung mit einem Spannungsdetektor 13 und einem nachgeschalteten Impulsgeber 15 benötigt am Eingang des Spannungsdetektors 13 eine phasensynchrone Wechselspannung, die es dem Spannungsdetektor 13 ermöglicht, einen bestimmten Punkt im Ablauf der Wechselspannung zu erfassen. Im einfachsten Fall detektiert der Phasendetektor 13 einen bestimmten Spannungspegel kurz vor, im oder nach dem Nulldurchgang, gibt dann ein Signal an den Eingang des Impulsgebers 15, der seinerseits einen Impuls bestimmter Länge formt. Die Dauer des Impulses ist dabei so festgelegt, daß der Impuls frühestens im Nulldurchgang des nachfolgenden Stroms endet. Der vom Impulsgeber 15 abgegebene Impuls kann entweder unmittelbar in den Steuerkreis des Halbleiterschalters 8 eingespeist werden oder mittelbar über den Pulsgenerator 18 während der Haltezeiten H verhindern, daß der Halbleiterschalter 8 getaktet wird. Nach Figur 6 bleibt die Schaltstrecke des Halbleiterschalters 8 während der durch die Haltebereichsgrenzen $H_1$, $H_2$ begrenzten Haltezeiten H geschlossen. Das Phasensynchrone Eingangssignal für den Spannungsdetektor 13 kann entweder über eine Anschlußklemme 21 der Wechselspannungsquelle über eine entsprechende Schaltung entnommen werden, oder mit Hilfe eines Integrators 11 erzeugt werden, dessen Eingang die vom Brückengleichrichter 23 abgegriffene pulsierende Gleichspannung zugeführt wird.

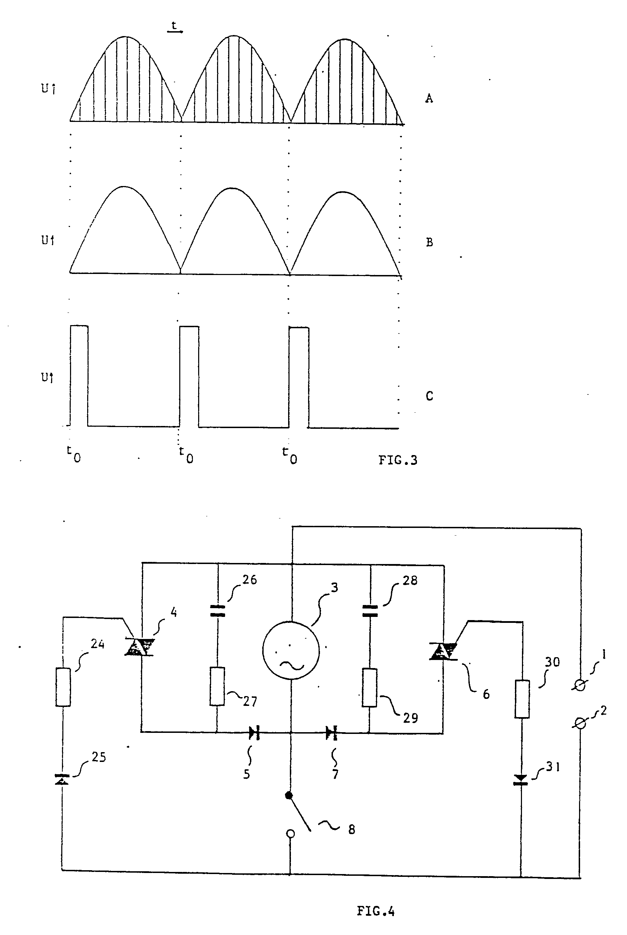

Die wichtigsten Spannungsdiagramme hierzu sind in Figur 3 dargestellt. Das Diagramm A zeigt die getaktete Gleichspannung, die unmittelbar am Brückengleichrichter 23 abgegriffen wird, das Diagramm B zeigt den Spannungsverlauf nach dem Integrator 11, der die Pulsfrequenz unterdrückt, so daß nur die Hüllkurve verbleibt, und das Diagramm C zeigt die durch den Impulsgeber 15 gebildeten Halteimpulse. In diesem Beispiel beginnen die Halteimpulse im Nulldurchgang der Soannung zum Zeitpunkt $t_o$.

Ob es besser ist, den Halbleiterschalter 8 während der Haltebereiche H geöffnet oder geschlossen zu halten, hängt von den jeweiligen Verhältnissen ab. Bei geschlossenem Halbleiterschalter 8 liegt während des Haltebereichs H die volle Wechselspannung und damit auch die volle Leistung an der Wechselstromlast 3. Da jedoch während der Haltezeit nicht getaktet wird, ist insoweit auch kein Stellen der von der Wechselstromlast 3 aufgenommenen Leistung möglich, so daß der maximale Stellbereich etwas eingeschränkt ist. Bei geöffnetem Halbleiterschalter 8 ist der Stellbereich gleich groß, dafür steht aber nicht die volle von der Wechselspannungsquelle abgegebene Leistung zur Verfügung. Bei geringer Phasenverschiebung zwischen Strom und Spannung fällt weder eine Einschränkung des Stellbereiches noch eine Einschränkung der Leistungsabgabe ins Gewicht.

Figur 4 zeigt ein gegenüber bekannten Schaltungen verbessertes Freilaufnetzwerk. Dieses Ausführungsbeispiel eines Freilaufnetzwerks der erfindungsgemäßen Schaltungsanordnung ist besonders herstellungskostengünstig, da als Freilaufschaltmittel billige Thyristoren oder vorzugsweise Triacs verwendet werden können, da erstens mittels der Wirkung der Halteschaltung 13, 15 sowie zweitens über eine spezielle RCD-Beschaltung 27, 26, 5; 29, 28, 7 gewährleistet ist, daß diese, obgleich sie dU/dt-empfindlich sind, auch bei schnellem Pulsbetrieb im Nanosekunden-Bereich bestimmungsgemäß funktionieren. Ziel der Verbesserung ist es, mit billigen Freilaufschaltmitteln auszukommen. Da es sich hierbei jedoch um dU/dt-empfindliche Bauelemente handelt, mußten besondere Maßnahmen ergriffen werden. Die einen induktiven Anteil aufweisende Wechselstromlast 3 ist wiederum über einen gesteuerten Halbleiterschalter 8 an die Anschlußklemmen 1, 2 einer Wechselspannungsquelle angeschlossen. Die Rückführung der induktiven Energie in den Laststromkreis geschieht mit Hilfe der als Freilaufschaltmittel wirkenden Triacs 4, 6. Diese haben gegenüber Thyristoren den Vorteil, daß die Ansteuerung von einer gemeinsamen Steuerleitung aus erfolgen kann.

Bekanntlich stellt jeder PN-Übergang eine spannungsabhängige Kapazität dar, die mit steigender Spannung kleiner wird. Daher fließt z.B bei positivem Spannungsanstieg neben dem statischen Sperrstrom noch ein kapazitiver Strom zum mittleren PN-Übergang. Bei einer hohen kritischen Spannungssteilheit (dU/dt)krit. wirkt dieser kapazitive Strom wie ein Steuerstrom, was zur ungewollten Zündung des Triacs führen kann. Besonders schnelle, steile Schaltimpulse, die durch den Halbleiterschalter 8 verursacht werden, können die Triacs ebenfalls in der falschen Halbwelle der angelegten Wechselspannung "Über-Kopf-Zünden". Um das zu verhindern, sind die beiden Freilaufzweige durch die Kombination eines RC-Gliedes 27, 26; 29, 28 mit einer Diode 5; 7 versehen. Dabei liegt jeweils die Reihenschaltung eines Kondensators 26; 28 und eines Widerstandes 27; 29 parallel zur Schaltstrecke des Triacs 4; 6. Der so schutzbeschaltete Freilaufzweig liegt über eine entsprechend gepolte Diode 5; 7 antiparallel zur Wechselstromlast 3.

Die aus den Kondensatoren 26; 28, Widerständen 27; 29 und Dioden 5; 7 bestehende Schutzbeschaltung für die Freilaufschalter 4, 6 stellt eine wesentliche Weiterbildung des Erfindungsgegenstandes dar.

Die erste Freilaufdiode 5 sorgt dafür, daß das RC-Netzwerk 27, 26 z.B. in der Zyklushälfte, in der der Freilaufschalter 4 nicht leitend sein muß, eine Gleichspannungsladung auf dem Kondensator 26 erhält. Diese wird aus den während der $\phi_2$-Bereiche wirksamen Schaltimpulsen auf dem Kondensator 26 aufaddiert. Die Kondensatorspannung steigt langsam treppenförmig von Null bis zum Scheitelwert $U_o$ an. Dadurch ist gewährleistet, daß dU/dt-empfindliche Freilaufschalter wie z.B. Triacs, keine großen, kritisch steilen, durch den Halbleiterschalter 8 in den $\phi_2$-Bereichen verursachten Schaltflanken wahrnehmen, sondern nur den langsamen über eine Halbwelle zeitlich gedehnten Spannungsanstieg am Kondensator 26 erkennen können. In gleicher Weise sorgt das RC-Netzwerk 29, 28, bestehend aus Kondensator 28 und Widerstand 29 in Kombination mit der zweiten Freilaufdiode 7 dafür, daß der zweite Freilaufschalter 6 nicht in der falschen Zyklushälfte leitend werden kann. Auch hier geschieht dies dadurch, daß in derjenigen Zyklushälfte, in welcher der zweite Freilaufschalter 6 nicht leitend sein darf, der Kondensator 28 mit einer Gleichspannung über die zweite Freilaufdiode 7 gespeist wird. In dem Moment, in welchem der jeweilige Freilaufschalter 4, 6 leitend sein soll, muß eine Ansteuerung (bei Triacs am Gate) stattfinden. Fig. 4 zeigt, daß dieses über den ersten Ansteuerwiderstand 24 und die erste Ansteuerdiode 25 für den ersten Freilaufschalter 4 und über den zweiten Ansteuerwiderstand 30 sowie die zweite Ansteuerdiode 31 für den zweiten Freilaufschalter 6 geschieht. Die Widerstände 27, 29 beugen vor, daß der Strom über die Freilaufschalter 4, 6 nicht zu groß wird. Der mit der Ansteuerung der Freilaufschalter 4, 6 einsetzende Entladestrom würde ohne die Widerstände 27, 29 die Freilaufschalter 4, 6, vorzugsweise Triacs, zerstören. Die Freilaufschaltung würde jedoch nie richtig arbeiten können ohne die erfindungsgemäße Halteschaltung. Da der empfindliche dU/dt-Wert von Triacs zur Folge hat, daß sie kontinuierlich leitend bleiben würden, wenn der Halbleiter 8 ohne Halteschaltung ununterbrochen schnelle Schaltimpulse abgeben würde, ist es demnach insbesondere bei Verwendung des Freilaufnetzwerks nach Fig. 4 notwendig, durch die Halteschaltung den schaltenden Charakter des Halbleiterschalters 8 mindestens in den $\phi_x$-Bereichen zu unterbrechen.

Zusammenfassend kann gesagt werden, daß durch die Halteschaltung 13, 15 zumindest in den $\phi_x$-Bereichen, vorzugsweise in den $\phi_1$-Bereichen, sowohl Schalt- als auch Induktionsspannungsimpulse unterdrückt werden, während in den $\phi_2$-Bereichen steile Schaltimpulse einerseits durch die RCD-Schutzbeschaltung 27, 26, 5; 29, 28, 7 und Induktionsspannungsimpulse andererseits durch entsprechende Ansteuerung der Freilaufschaltmittel 4, 5; 6, 7 verhindert werden.

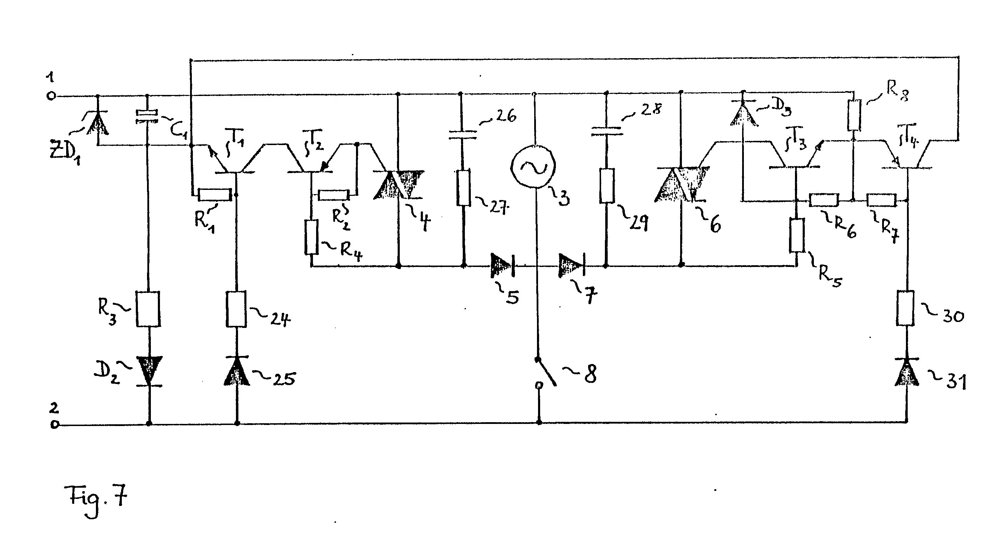

Figur 7 zeigt ein weiteres Ausführungsbeispiel eines Freilaufnetzwerks gemäß Figur 4, jedoch mit erheblich verlustleistungsreduzierter Triac 4, 6-Ansteuerschaltung. Dadurch bedingt, daß bei einem Freilaufnetzwerk gemäß Figur 4 eine kontinuierliche Ansteuerung der Triacs 4, 6 über die RD-Glieder 24, 25; 30, 31 erfolgt, wird durch den während einer positiven bzw. negativen-Halbwelle kontinuierlich fließenden Steuerstrom verhältnismäßig viel Verlustleistung für die Ansteuerung der Triacs 4, 6 verbraucht. Das in Figur 7 beschriebene Ausführungsbeispiel gewährleistet durch eine pulsierende Triac 4, 6-Ansteuerschaltung eine wesentliche Verlustleistungsreduzierung (statischer Verlust ca. 206 mW, bei Dauersteuerung ca. 1,8 W). Für die Triac 4, 6-Ansteuernetzwerke T1, T2, R1, R2, R4; T3, T4, R5, R6, R7, R8, D3 ist zunächst eine zusätzliche Speiseschaltung $ZD_1$, D2, C1, R3 vorgesehen. Hierbei ist Parallel zu den Wechselspannungsklemmen 1, 2 die Reihenschaltung eines mit einer Zenerdiode ZD1 überbrückten Koppelkondensators C1, eines Widerstands R3 sowie einer Koppeldiode D2 angeordnet. Die Kathode der Zenerdiode ZD1 liegt am Potential der Wechselspannungsklemme 1 und die Kathode der Diode D2 liegt am Potential der Wechselspannungsklemme 2. Die Speiseschaltung selbst nimmt nur eine geringe Leistung auf, da der Widerstand R3 hochohmig dimensioniert ist.

Die halbwellengesteuerte Synchronisation für die Ansteuerung der Triacs 4, 6 erfolgt wie im Ausführungsbeispiel gemäß Figur 4 über die RD-Glieder 24, 25; 30, 31, wobei jedoch die Widerstände 24, 30 deutlich hochohmiger sind. Die an den Widerständen 24, 30 halbwellenperiodisch über die gesamte Dauer einer Halbwelle anstehenden Synchronisationsimpulse steuern nun nicht mehr direkt die Triacs 4, 6 an, sondern steuern die Basen eines NPN-Transistors T1 bzw. eines PNP-Transistors T4 der Triac 4, 6-Ansteuerschaltung jeweils abwechselnd in den leitenden oder sperrenden Zustand.

Die Triac (4, 6)-Ansteuerschaltung weist im wesentlichen zwei NPN-Transistoren T1, T3 und zwei PNP-Transistoren T2, T4 auf. Die Kollektoren des NPN-Transistors T1 und des PNP-Transistors T2 einerseits, die Emitter des NPN-Transistors T3 und des PNP-Transistors T4 andererseits sowie der Emitter des NPN-Transistors T1 und der Kollektor des PNP-Transistors T4 sind untereinander leitend verbunden. Die Basis und der Emitter des Transistors T1 sind mittels Widerstand R1, die Basis und der Emitter des Transistors T2 sind mittels Widerstand R2, die Basis und der Emitter des Transistors T3 sind mittels Widerstand R6 sowie die Basis und der Emitter des Transistors T4 sind mittels Widerstand R7 überbrückt. Die Basis des Transistors T1 ist mit dem Widerstand 24 des RD-Glieds 24, 25 und die Basis des Transistors T4 ist mit dem Widerstand 30 des RD-Glieds 30, 31 verbunden. Das Basispotential des Transistors T2 ist über den zugehörigen Basiswiderstand R4 an die Anode der Freilaufdiode 5 und das Basispotential des Transistors T3 ist über den zugehörigen Basiswiderstand R5 an die Kathode der Freilaufdiode 7 geführt.

Wenn nun der Transistor T1 über den hochohmigen Widerstand 24 halbperiodisch in den leitenden Zustand versetzt wird, wird er versuchen, über den Koppelkondensator C1 das Speisepotential der Speiseschaltung, welches zwischen dem Koppelkondensator C1 und dem Widerstand R3 abgegriffen wird, an das Gate von Triac 4 weiterzugeben. Dies kann aber nur gelingen, wenn der Transistor T2 ebenfalls leitend angesteuert ist. Dies ist wiederum nur dannmöglich, wenn der Triac 4 sich im gesperrten Zustand befindet. Wenn nämlich der Triac 4 leitend wäre, würde der Transistor T2 keine Basisansteuerung von der Anode der Freilaufdiode 5 mehr bekommen und demnach den Transistor T2 sperren. Wenn sich der Triac 4 dagegen im gesperrten Zustand befindet, dann wird ein relativ hohes Potential an der Anode der Freilaufdiode 5 vorhanden sein, so daß der Transistor T2 über den Widerstand R4 leitend angesteuert wird. Wenn jetzt zusätzlich die richtige Halbwelle an der Basis des Transistors T1 ansteht, nämlich diejenige, während der der Transistor T1 leitend ist, dann wird, da die Transistoren T1, T2 in Serie geschaltet sind, auch das Gate von Triac 4 angesteuert. Jedesmal, wenn der Triac 4 sperrt, wird der Transistor T2 leitend durchgesteuert. Um den Triac 4 anzusteuern, sind also kumulativ stets zwei Bedingungen notwendig. Erstens das Leitendwerden des Transistors T1 in der richtigen Halbwelle, wobei der Triac 4 durchaus leitend sein darf und zweitens das Leitendwerden des Transistors T2 aufgrund der Tatsache, daß seine Basis leitend genau dann angesteuert wird, wenn der Triac 4 sperrt. Was für die Transistoren T1, T2 gilt, trifft analog auch für die Transistoren T3, T4 zu. Auch das Triac 6-Ansteuernetzwerk T3, T4, R5, R6, R7, R8, D3 entnimmt sein Speisepotential zwischen Koppelkondensator C1 und Widerstand R3 der erwähnten Speiseschaltung. Die Synchronisation für die richtige Halbwelle wird über das RD-Glied 30, 31 erzielt. Der Widerstand 30 ist wiederum sehr hochohmig und der an ihm anstehende Sychronisationsimpuls steuert den Transistor T4 an. Der Transistor T4 wird jedesmal, wenn er in der richtigen Halbwelle der Netzspannung angesteuert wird, das Speisepotential auf den Emitter des Transistors T3 weiter leiten können, wobei der Triac 6 durchaus leitend sein darf. Der Transistor T3 wird aber nur dann leitend werden, wenn der Triac 6 im Sperrzustand ist. Auch hier sind also kumulativ zwei Bedingungen notwendig, um den Triac 6 anzusteuern. Erstens das Leitendwerden des Transistors T4 während der richtigen Halbwelle und zweitens das Leitendwerden des Transistors T3. Letzteres wird dadurch erreicht, daß über den Widerstand R5 laufend das an der Anode der Freilaufdiode 7 anstehende potential abgefragt und an die Basis des Transistors T3 geführt wird. Durch die Serienschaltung der Transistoren T3, T4 wird also gewährleistet, daß das Gate von Triac 6 nur dann Strom bekommt, wenn der Transistor T4 während der richtigen Halbwelle leitend angesteuert wird und wenn der Transistor T3 leitend angesteuert wird, was der Fall ist, wenn der Triac 6 sperrt.

Um vorzubeugen, daß die Basis des Transistors T3 ein positiveres Potential als das Speisepotential erhält, ist die Diode D3 vorgesehen. Ohne die Diode D3 könnte am Triac 6 eine falsche Ansteuerung erfolgen. Wesentlich ist, daß insgesamt eine hochohmige Ansteuerung vorgenommen wird und daß das Gate der Triacs 4, 6 nur dann leitend angesteuert wird, wenn der diesbezügliche Triac im Sperrzustand ist.

Aufgrund der Tatsache, daß die Triacs 4, 6 nunmehr während einer Halbwelle nicht mehr kontinuierlich, sondern gepulst angesteuert werden, wohingegen sie während der anderen Halbwelle jeweils sperrend sind, wird Steuerleistung am Gate eingespart. Obgleich die erwähnte Triac 4, 6-Ansteuerschaltung auch auf andere Art und Weise, z.B. mit Hilfe von logischen Bausteinen, verwirklicht werden könnte, ist bei Verwendung von Transistoren eine bessere Dimensionierung möglich. Darüber hinaus wird die erforderliche hohe Schaltgeschwindigkeit hierdurch ermöglicht.

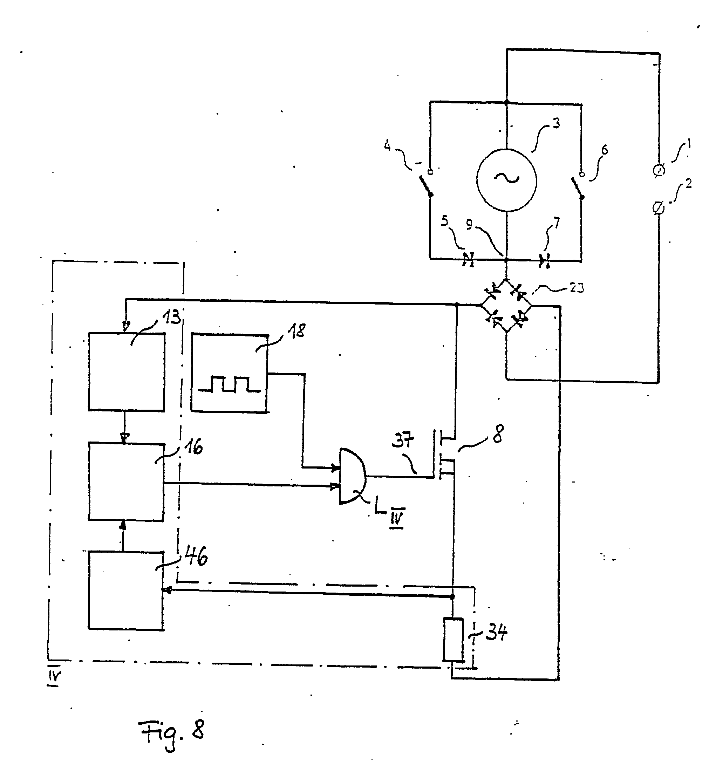

Figur 8 zeigt das Prinzipschaltbild des erfindungsgemäßen Wechselstromstellers gemäß Figur 2, jedoch mit einer automatischen cos φ -Anpassungsschaltung IV. Bekanntlich ist der als Quotient aus Wirkleistung und Scheinleistung gebildete Leistungsfaktor cos φ leistungabhängig. Zwar wird man den in der Halteschaltung 13, 15 erzeugten Sperrimpuls so breit wählen können, daß er sicher, auch bei veränderlichem cos φ, den kritischen $\phi_x$ -Bereich überdeckt. Man nimmt jedoch hierbei in Kauf, daß in einzelnen Leistungsbereichen eigentlich eine zu lange Haltezeit vorgegeben wird. Vorteilhafter ist es demgemäß, den Haltebereich genau auf das hinsichtlich des cos φ unbedingt erforderliche Maß abzustimmen. Dies wird mit der in Figur 8 prinzipmäßig dargestellten Regelschaltung erreicht. An einem als Stromsensor dienenden dritten Meßwiderstand 34 wird ein die Stromstärke repräsentierendes Spannungssignal abgegriffen. Mit Hilfe eines Stromdetektors 46 kann nun zum Zeitpunkt I=0 oder I ≈ 0 ein Rücksetz-Signal auf das von einem zweiten Impulsgeber 16 bereits gestartete Sperrsignal gegeben werden. Damit kann der Halteimpuls auf die unbedingt erforderliche Dauer geformt werden. Damit wird also die zweite Haltebereichsgrenze H2 nicht von vornherein fest vorgegeben, sondern sie wird durch den Stromnulldurchgang bestimmt. Wenn der zweite Impulsgeber 16 über das Rücksetz-Signal des Stromdetektors 46 getriggert worden ist, wird der nicht mit dem Pulsgenerator 18 beaufschlagte Eingang einer Schaltlogik $L_{IV}$ nicht mehr angesteuert, so daß in der Folge der Halbleiterschalter 8 an seiner Steuerelektrode 37 wieder gepulst angesteuert wird. Beim nächsten Spannungsnulldurchgang U(t) = 0 wird der Spannungsdetektor 13 den zweiten Impulsgeber 16 wiederum zum Absetzen eines Halteimpulses veranlassen, worauf der Halbleiterschalter 8 wie bereits beschrieben in leitender Stellung gehalten wird, bis zu dem Moment, in welchem wieder ein Stromnulldurchgang erreicht wird. Wenngleich der zweite Impulsgeber 16 auch eine bistabile Schaltfunktion haben kann, ist doch aus Sicherheitsgründen eine monostabile Funktion vorzuziehen. Hierbei ist notwendig, daß die maximale Pulszeit ausreichend ist, um jede durch den Leistungsfaktor cos φ verursachte Phasenverschiebung zu überbrücken. Unter praktischen Erwägungen ist es nicht so wichtig, daß der Spannungsdetektor 13 und der Stromdetektor 46 exakt auf U(t) = 0 bzw. I(t) = 0 ansprechen. Wichtig ist aber, daß der Spannungsdetektor 13 die Spannung detektiert hat, bevor der Stromdetektor 46 den Strom detektiert hat. Angenommen, daß cos φ = 1 wäre und daß der Spannungsdetektor 13 und der Stromdetektor 46 exakt auf U (t) = 0 bzw. I (t) = 0 ansprechen würden, hätte das, da es in diesem Fall keine Phasenverschiebung gibt, katastrophale Folgen für die Schaltung. Um dies zu vermeiden, ist es notwendig, den Spannungsdetektor 13 auf einer monoton abfallenden Spannungsflanke kurz vor einem Spannungsnulldurchgang U (t) = 0 ansprechen zu lassen. Hinsichtlich der Stromdetektion wäre es ideal, wenn der Stromniveaudetektor 46 genau bei I (t) = 0 ansprechen würde. In der Praxis ist dieses jedoch unmöglich, so daß eine ungenaue Detektion von I(t) = 0 in Kauf zu nehmen ist.

Der Fall cos φ < 1 ist weniger problematisch, da der Stromnulldurchgang dann später (bei induktiver phasenverschiebung) bzw. früher (bei kapazitiver Phasenverschiebung) kommt als der Spannungsnulldurchgang. Um jedoch die Schaltung störungsfrei arbeiten zu lassen, ist es, unter Berücksichtigung der Tatsache, daß auch eine induktive Last unter bestimmten Bedingungen einen cos φ≈1 haben kann, angezeigt, daß die die erste Haltebereichsgrenze H1 definierende Spannungsdetektion auf einer monoton abfallenden Spannungsflanke vor einem Spannungsnulldurchgang gewählt wird. Wichtig ist, daß der Stromdetektor 46 auf einem möglichst niedrigen Stromwert (idealerweise I (t) = 0) anspricht und daß der Stromniveaudetektor 46 immer später anspricht als der Spannungsdetektor 13.

In bestimmten Anwendungsfällen kann es aus Sicherheitsgründen erforderlich sein, zwei Impulsgeber 15, 16 zu verwenden, so daß zu jeder Zeit eine cos φ -Korrektur gewährleistet ist. Die beiden Impulsgeber 15, 16 werden dann parallel angeschlossen, wobei der erste Impulsgeber 15 eine kurze feste Pulszeit abgibt und der zweite Impulsgeber 16 einen über den Rücksetz-Impuls des Stromdetektors 46 gekürzten Halteimpuls abgibt. Zweck der beiden Impulsgeber 15, 16 ist es, zu gewährleisten, daß während des Spannungsnulldurchgangs stets eine relativ kurze Pulszeit am nicht mit dem Puls des Pulsgenerators 18 beaufschlagten Eingang der Schaltlogik

L$_{IV}$ ansteht, weil der Bereich des Spannungsnulldurchgangs aufgrund der dort vorhandenen kleinen Spannungsniveaus sehr störspannungsempfindlich ist.

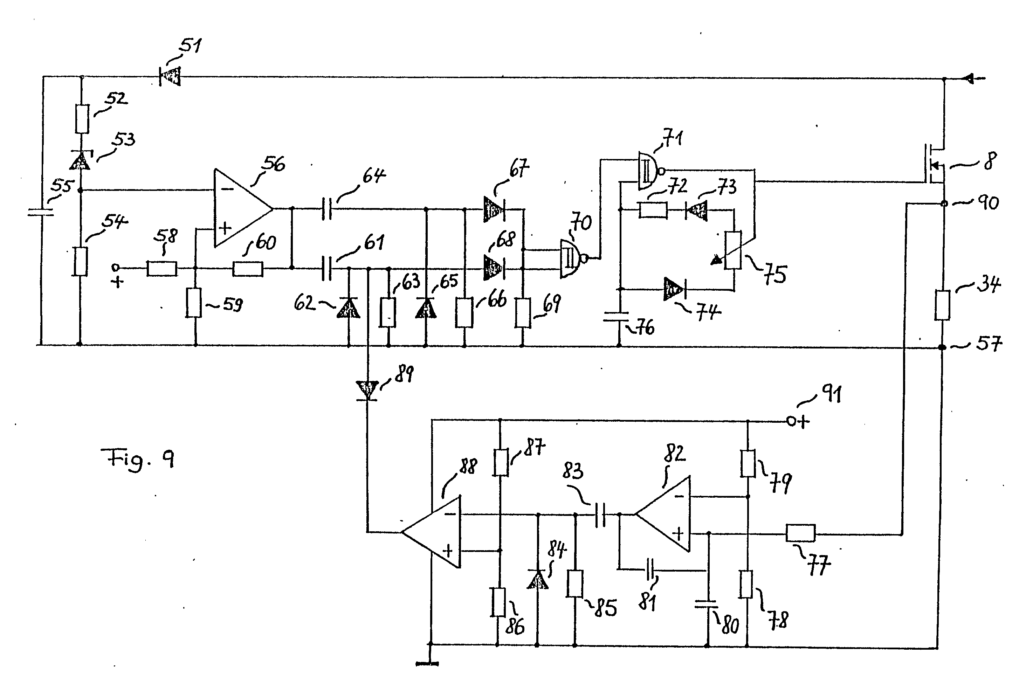

Figur 9 zeigt ein Ausführungsbeispiel einer Halteschaltung mit automatischer cos φ -Anpassung IV und zwei parallel liegenden Impulsgebern 15, 16. Das Potential eines Anschlusses des Gleichstromzweigs des Brückengleichrichters 23 wird über eine in Durchlaßrichtung gepolte Diode 51 des Integrator 11- und Spannungsdetektor 13-Netzwerkes 51 bis 56 an die Parallelschaltung eines Kondensators 55 und einer aus einem Widerstand 52, einer Zenerdiode 53 und einem Widerstand 54 gebildeten Serienschaltung geführt. Das zwischen der Zenerdiode 53 und dem Widerstand 54 anstehende Potential wird mit dem invertierenden Minus-Eingang eines ersten Komparators 56, vorzugsweise eines Operationsverstärkers, verbunden. Der nichtinvertierende Plus-Eingang des Komparators 56 wird mit dem an den Widerständen 58, 59 eingestellten Referenzspannungs-Signal gespeist. Der Ausgang des Komparators 56 ist über den Widerstand 60 an den Plus-Eingang des Komparators 56 zurückgeführt. Der Arbeitspunkt des Komparators 56 wird im wesentlichen durch den Wert der Zenerdiode 53 und die Widerstände 58, 59 bestimmt, wobei anstelle der Zenerdiode 53 auch ein Widerstand oder auch ein vergrößerter Widerstand 58 verwendet werden kann. Der Ausgang des Komparators 56 wird sowohl an einen Kondensator 61 eines ersten monostabilen Multivibrators 61, 62, 63, welcher den zweiten Impulsgeber 16 repräsentiert, als auch an einen hierzu parallel geschalteten Kondensator 64 eines zweiten monostabilen Multivibrators 64, 65, 66, welcher den ersten Impulsgeber 15 repräsentiert, geführt. Die den Kondensatoren 61, 64 nach geschalteten Parallelschaltungen aus jeweils einem Widerstand 63, 66 und seiner zugehörigen in Sperrichtung gepolten Diode 62, 65 werden ausgangsseitig mit einem ersten Potentialabgriff 57 verbunden. Das jeweils am Eingang der parallelschaltungen 62, 63 und 65, 66 abgegriffene Spannungssignal wird jeweils über zwei in Durchlaßrichtung gepolte Dioden 67, 68 auf die Eingänge eines Inverters 70 geführt sowie über einen Widerstand 69 ebenfalls an den hinter dem dritten Meßwiderstand 34 liegenden ersten Potentialabgriff 57 angekoppelt. Der Ausgang des Inverters 70 beaufschlagt einen Eingang eines NAND-Gatters 71 eines Pulsgenerator 18- und Stellglied 17-Netzwerkes 71 bis 76. Der Ausgang des NAND-Gatters 71 beaufschlagt sowohl die Steuerelektrode 37 des Halbleiterschalters 8 als auch den Einstellkontakt eines Stellpotentiometers 75. Ein Anschluß des Stellpotentiometers 75 wird über eine in Durchlaßrichtung gepolte Diode 73 und einen Widerstand 72 zusammen mit der dem anderen Anschluß des Stellpotentiometers 75 nachgeschalteten, in Sperrichtung gepolten Diode 74 an den zweiten Eingang des NAND-Gatters 71 geführt. Dieser zweite Eingang des NAND-Gatters 71 ist zudem über einen Kondensator 76 an den ersten Potentialabgriff 57 gelegt.

Das am zweiten Potentialabgriff 90 anstehende Potential wird über einen Widerstand 77 an den Plus-Eingang eines zweiten Komparators 82 geführt und über einen-Kondensator 80 an den ersten Potentialabgriff 57 angekoppelt. Der Ausgang des zweiten Komparators 82 beaufschlagt über ein drittes monostabiles Multivibrator-Netzwerk 83, 84, 85 den Minus-Eingang eines dritten Komparators 88. Die für den Minus-Eingang des zweiten Komparators 82 vorgesehene Referenzspannung wird aus dem Spannungsteiler-Netzwerk 78, 79 zwischen dem Spannungsteilerwiderstand 78 und dem Spannungsteilerwiderstand 79 abgegriffen. Die für den Plus-Eingang des dritten Komparators vorgesehene Referenzspannung wird aus dem Spannungsteiler-Netzwerk 86, 87 zwischen dem Spannungsteilerwiderstand 86 und dem Spannungsteilerwiderstand 87 abgegriffen. Das Spannungsteiler-Netzwerk 78, 79, 86, 87 wird über ein Versorgungspotential 91 gespeist und an den ersten Potentialabgriff 57 rückgeführt. Der Ausgang des zweiten Komparators 82 ist mit seinem Plus-Eingang über den Kondensator 81 kapazitiv gekoppelt. Das am Ausgang des dritten Komparators 88 anstehende Signal wird über eine in Sperrichtung gepolte Diode an das zwischen dem Konden sator 61 und der Anode der Diode 68 liegende Potential geführt.

Die Halteimpulse werden in den monostabilen Multivibratoren 61, 62, 63; 64, 65, 66 genau dann geformt, wenn die Spannung am invertierenden Minus-Eingang des ersten Komparators 56 ein bestimmtes Spannungsniveau, vorzugsweise 50 bis 70 V unterschreitet. In diesem Fall wird der Ausgang des ersten Komparators 56 positiv angesteuert und diese positiv fortschreitende Veränderung wird über den Kondensator 61 auf den Widerstand 63 übertragen. Von hier aus geht der erregte monostabile Puls über die Diode 68 zum Inverter 70. In diesem Fall wird der normalerweise am Ausgang des NAND-Gatters 71 anstehende Rechteckpuls einstellbaren Tastverhältnisses derart ausgeblendet, daß nur noch der Halteimpuls über die Steuerelektrode 37 den Halbleiterschalter 8 ansteuern kann. Wenn nun nach einer fest vorgegebenen Haltezeit der erste Eingang des NAND-Gatters-71 wieder auf Null zurückgesetzt wird, wird der Halbleiterschalter 8 wieder gepulst angesteuert. Die Zeit des leitenden Zustands des Halbleiterschalters 8 entspricht genau der monostabilen Zeit, die vom ersten monostabilen Multivibrator 61, 62, 63 erzeugt wird. Diese Pulsdauer wird jedoch durch den Stromniveaudetektor 46 vorzeitig unterbrochen. Der zweite Komparator 82 arbeitet aufgrund des Kondensators 81 wie ein Oszillator. Der Komparator 82 beginnt jedoch erst dann als Oszillator zu arbeiten, wenn der durch den dritten Meßwiderstand 34 fließende Strom einen bestimmten Minimumwert überschritten hat. Die am Ausgang des zweiten Komparators 82 anstehenden Oszillatorimpulse gelangen über den Kondensator 83 auf den Minus-Eingang des Dritten Komparators 88. Sein Ausgang, der ohne die erwähnte Ansteuerung normalerweise positiv ist, geht jetzt pulsierend auf ein Nullniveau herunter. Aus diesem Grunde wird der erste monostabile Multivibrator 61, 62, 63 über die Diode 89 vorzeitig entleert, was zu einem durch den Stromdetektor 46 getriggerten Abbruch des Halteimpulses führt. Selbstverständlich wird der erste monostabile Multivibrator 61, 62, 63 von vornherein eine so ausreichende Dauer des Halteimpulses erzeugen, daß auch die größten denkbaren $\phi_1$-Bereiche noch überbrückt werden könnten.

In Figur 9 ist schließlich zur Sicherheit noch ein zweiter monostabiler Multivibrator 64, 65, 66 vorgesehen, welcher mit dem ersten monostabilen Multivibrator 61, 62, 63 parallel geschaltet ist. Er hat jedoch eine viel kürzere Pulszeit als der erste monostabile Multivibrator 61, 62, 63 und die von ihm erzeugte Dauer des Halteimpulses kann nicht von einem Rücksetz-Signal des Stromdetektors 46 verkürzt werden. Auf diese Weise ist gewährleistet, daß der Halbleiterschalter 8 bei jedem Spannungsnulldurchgang jedenfalls während einer bestimmten kurzen Zeit leitend ist.

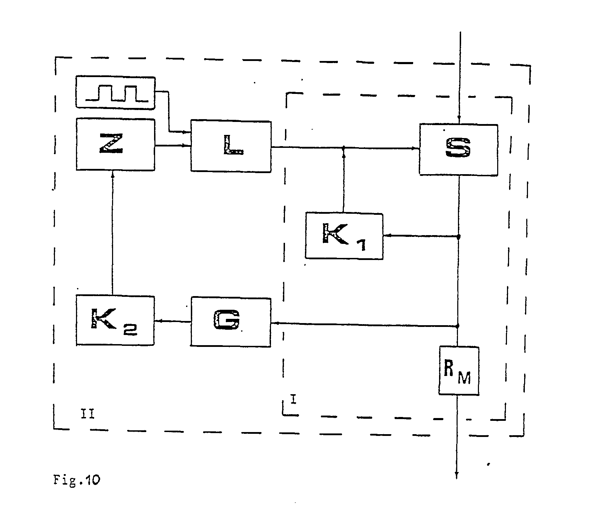

Figur 10 zeigt das Prinzipschaltbild einer Schaltungsanordnung zum Schutz eines als Schaltregler arbeitenden pulsgesteuerten Halbleiterschalters gegen Überlastung und Kurzschluß durch ein Spitzenstrombegrenzungsnetzwerk I und ein Effektivstrombegrenzungsnetzwerk II.

Ein dem Istwert des Spitzenstroms $I_S$ analoges Spannungssignal wird direkt am Meßwiderstand $R_M$ abgegriffen und im Komparator $K_2$ mit einer internen, den Sollwert repräsentierenden Referenzspannung verglichen. Die resultierende Regelabweichung steuert das Stellglied S bei $I < I_S$ in den EIN-Zustand bzw. bei $I \geq IS$ in den AUS-Zustand. Diese Spitzenstrombegrenzung arbeitet aber eigentlich analog, da der Schaltimpuls, der die beim Überschreiten eines Spitzenstroms sich ergebende Regelabweichung repräsentiert, nicht mit unendlich großer Steilheit einsetzt.

Das Effektivstrombegrenzungsnetzwerk arbeitet jedoch als Zweipunkt-Regelschaltung. Hierzu wird der Istwert der Regelgröße Effektivstrom an einem Istwertgeber G erfaßt. In-einem Komparator $K_2$ wird die Differenzaus einem vorgebbaren Sollwert und dem erfaßten Istwert als Regelabweichung ermittelt, wobei ein als Stellglied S wirkender pulsgesteuerter Halbleiterschalter bei positiver Regelabweichung in den Zustand EIN bzw. bei negativer Regelabweichung in den Zustand AUS gesteuert werden kann. Dies geschieht z.B. mittels einer Schaltlogik L. In einem Zeitformer Z kann die bei Erreichen oder Überschreiten des maximalen Effektivstroms erforderliche Dauer des Sperrsignals so dimensioniert werden, daß der Halbleiterschalter wieder soweit abkühlen kann, daß er weiterhin im sicheren Arbeitsbereich (SOAR) arbeiten kann.

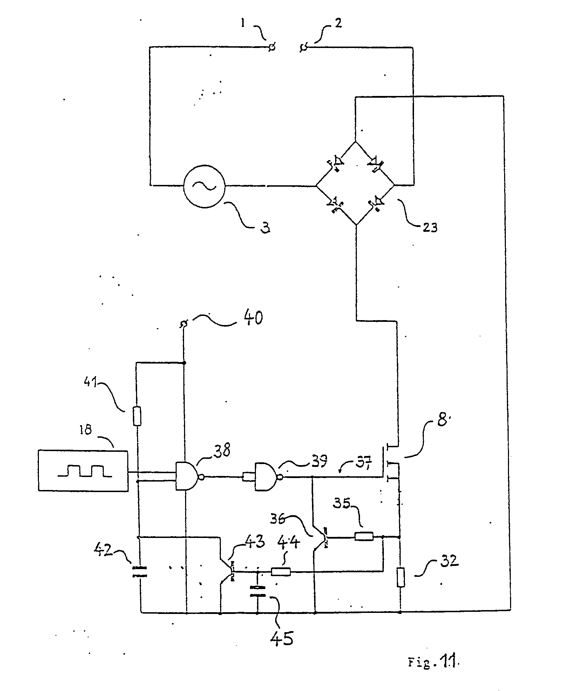

Figur 11 zeigt ein Ausführungsbeispiel der Schutzschaltungsanordnung gemäß Figur 10.

Der zu schützende Halbleiterschalter 8 liegt wie bereits beschrieben im Gleichspannungszweig eines zur Wechselstromlast 3 seriengeschalteten Brückengleichrichters 23. Da insbesondere Transistoren bekanntlich sehr empfindlich gegenüber solchen in ihnen erzeugten Verlustleistungen sind, für welche sie nicht ausgelegt sind, muß gewährleistet sein, daß der Halbleiterschalter 8 stets im sogenannten sicheren Arbeitsbereich arbeiten kann. Hierfür ist eine Leistungsbegrenzungsschaltung zum Schutze des Halbleiterschalters 8 vorgesehen, die aus einem Spitzenstrombegrenzungsnetzwerk I sowie einem Effektivstrombegrenzungsnetzwerk II besteht. Da die in eine Transistor umgesetzte, durch Wärmeerzeugung charakterisierte Verlustleistung proportional zum Quadrat des durchfließenden Stroms ist, wird dieser mittels eines am zweiten Meßwiderstand 33 abgreifbaren Spannungsabfalls als Eingangsgröße sowohl für das Spitzenstrombegrenzungsnetzwerk I als auch für das Effektivstrombegrenzungsmeßwerk II erfaßt.

Hinsichtlich des Spitzenstrombegrenzungsnetzwerks I stellt sich am Basis-Emitter-Übergang des ersten NPN-Transistors 36, solange der erste-NPN-Transistor 36 sperrt, eine gewisse Referenzspannung ein. Diese beträgt z.B. bei üblichen bipolaren Silizium-Transistoren ca. 0,7V. Sobald die am ersten Meßwiderstand 32 abgegriffene Spannung den Wert der Referenzspannung überschreitet, wird der erste NPN-Transistor 36 über den Basiswiderstand 35 leitend angesteuert. Wenn der erste NPN-Transistor 36 leitend wird, wird das Potential der mit dem Kollektor des ersten NPN-Transistors 36 verbundenen Steuerelektrode 37 des Halbleiterschalters 8 sofort kleiner, so daß der Halbleiterschalter 8 als Stellglied den sowohl durch den Halbleiterschalter 8 als auchdurch die Wechselstromlast 3 fließenden Strom begrenzen wird. Wenn als Halbleiterschalter 8 ein schnellschaltender Transistor verwendet wird und die Schaltung im übrigen entsprechend dimensioniert ist, kann ein Ansprechender Spitzenstrombegrenzung innerhalb von Nanosekunden erreicht werden. Das Spitzenstrombegrenzungsnetzwerk alleine vermag jedoch nicht den Halbleiterschalter 8 gegen zu große Verlustleistungsaufnahme zu schützen.

Das zusätzlich erforderliche Effektivstrombegrenzungs netzwerk II stellt sicher, daß der Strom durch den Halbleiterschalter 8 auch auf einen effektiven Höchstwert hin überprüft wird. Parallel zum ersten Meßwiderstand 32 ist der Eingang eines Integrators 44, 45 gelegt, welcher aus einem RC-Glied in Vierpol-Tiefpaßschaltung besteht. Die einzelnen gepulst am ersten Meßwiderstand 32 anstehenden I dt-Impulse werden über den Integratorwiderstand 44 dem Integratorkondensator 45 zugeführt. Nach einer gewissen, durch Wahl der Zeitkonstante $\tau$ = RC vorgebbaren Zeit ist der Integratorkondensator 45 vollständig aufgeladen, so daß am Ausgang des Integrators 44, 45 eine bestimmte Spannung ansteht, die ein Maß für den effektiven Strom durch den Halbleiterschalter 8 ist und mit der die Basis-Emitter-Strecke des zweiten NPN-Transistors 43 beaufschlagt wird. Die am Ausgang des Integrators 44, 45 anstehende Signalspannung repräsentiert genaugenommen nur den arithmetischen Mittelwert des Laststroms.

Da arithmetischer und quadratischer Mittelwert jedoch über den sogenannten Formfaktor, welcher ein Maß der Kurvenform darstellt, verknüpft sind, wird am Ausgang des Integrators 44, 45 auch ein Maß des Effektivstroms erfaßt. Die Bauelemente sind so dimensioniert, daß genau dann, wenn der Effektivstrom durch den Halbleiterschalter 8 einen bestimmten höchstzulässigen Effektivwert überschreitet, der zweite NPN-Transistor 43 leitend wird, so daß sich ein parallel zur Kollektor-Emitter-Strecke des zweiten NPN-Transistors 43 geschalteter Zeitformerkondensator 42 entladen kann. In diesem Fall wird ein mit dem Kollektor des zweiten NPN-Transistors 43 verbundener erster Eingang eines ersten NAND-Gatters 38 mit einem Null-Signal angesteuert, wohingegen der zweite Eingang des ersten NAND-Gatters 38 ständig mit einem Rechteckimpuls einer mehr als zweifachen Nennfrequenz beaufschlagt wird. Am Ausgang des zweiten NAND-Gatters 39 steht in diesem Fall ein Eins-Signal, welches die zusammengeschalteten Eingänge des ersten NAND-Gatters 38 ansteuert. Das zweite NAND-Gatter 39 wirkt als Inverter, so daß sein Ausgang, der mit der Steuerelektrode 37 des Halbleiterschalters 8 verbunden ist, den Halbleiterschalter 8 sperrend ansteuert. Die Schaltlogik $L_{II}$ 38, 39 (vgl. Fig. 10) kann verschieden strukturiert sein; z.B. wäre auch ein NAND-Gatter oder ein Mikroprozessor einsetzbar. Da nunmehr der Halbleiterschalter 8 als Stellglied S (vgl. Fig. 10) den Strom und damit auch den Effektivstrom durch sich selbst unterbricht, bekommt er Gelegenheit sich abzukühlen. Da andererseits aber nunmehr keine I dt-Impulse mehr aufintegriert werden, wird der zweite NPN-Transistor 43 sperrend angesteuert. In diesem Fall kann sich der Zeitformerkondensator 42 über den Zeitformerwiderstand 41 aus dem Speisepotential 40 wieder aufladen. Wenn der Zeitformerkondensator 42 genügend aufgeladen ist, wird das erste NAND-Gatter 38 in einem bestimmten Augenblick wieder umschalten und sofort anschließend auch den Ausgang des zweiten NAND-Gatters 39. Folglich steht an der Steuerelektrode 37 wieder ein schaltendes Potential an, wodurch der Rechteckimpuls des Pulsgenerators 18 über das erste NAND-Gatter 38 und das zweite NAND-Gatter 39 den Halbleiterschalter 8 wieder ansteuern kann.

Zeigt sich, daß ein effektiver Strom durch den Halbleiterschalter 8 noch immer einen bestimmten Höchstwert überschreitet, wiederholt sich der zuvor beschriebene geschlossene Wirkungsablauf. Es zeigt sich, daß das Effektivstrombegrenzungsnetzwerk II in der Lage ist, den höchst zulässigen Effektivstrom dynamisch regelnd innerhalb einer bestimmten Bandbreite zu halten. Regelungs- technisch liegt eine Zwei-Punkt-Regelung nebst Haltegliedsteuerung (DIN 19226, Nr. 11.1, Nr. 8.4.2) vor. Ferner wird unter dem Einfluß einer Störgröße, welche zu einem unzulässig hohen Effektivstrom führt, der Halbleiterschalter 8 nicht nur wie im normalen Betriebszustand mit einer Pulssteuerung ausgesteuert, sondern es wird eine Schwingungspaketsteuerung (DIN 41750, Teil 2, Nr.3.4) überlagert. Wenn die Steuerelektrode 37 des Halbleiterschalters 8 sowohl vom Spitzenstrombegrenzungsnetzwerk I als auch vom Effektivstrombegrenzungsnetzwerk II mit dem Freigabesignal 1 angesteuert wird, schaltet der mittels Pulsgenerator 18 aufgeprägte Rechteckpuls den Halbleiterschalters 8 mit einer vorgegebenen Schaltfrequenz. Dies hat zur Folge, daß auch Spitzenströme durch den Halbleiterschalter 8 mit dieser Frequenz erscheinen. Hat z.B. die Wechselstromlast 3 eine parasitäre Kapazität, wird der Spitzenstrom mit dieser vorgegebenen Frequenz pulsierend durch den Halbleiterschalter 8 fließen. Er kann dies aber nur insoweit, als erstens der vorgegebene Spitzenstrom als auch zweitens der vorgegebene Effektivstrom nicht überschritten wird. Mit der erfindungsgemäßen Schaltungsanordnung nach Fig. 2 kann somit eine Laststromregelung durchgeführt werden.

Es erscheint deutlich, daß die Zeit, die während des Aufladens des Zeitformerkondensators 42 vergeht und welche der Schaltpause des Halbleiterschalters 8 entspricht, genügend lang sein muß, damit der Halbleiterschalter 8 sich wieder abkühlen kann. Dies kann durch Dimensionierung der Zeitkonstanten $\tau = RC$ des Zeitformers Z sowie durch Abstimmung auf die Kenndaten des verwendeten Halbleiterschalters 8 erreicht werden. Es ist wichtig, die Abschaltzeit des Halbleiterschalters 8, die über den zweiten NPN-Transistor 43 eingeleitet wird, so ausreichend zu dimensionieren, daß der Halbleiterschalter 8 stets im SOAR-Gebiet betrieben wird. Das SOAR-Gebiet kann grundsätzlich aus dem Kennlinienfeld des verwendeten Halbleiterschalters 8 ermittelt werden. In der Praxis wurde untersucht, wie schnell der zweite NPN-Transistor 43 des Effektivstrombegrenzungsnetzwerks II arbeiten darf. Dies hängt von der Pulsbreite der maximal zu erwartenden Spitzenstromimpulse ab, die durch den Halbleiterschalter 8 und den ersten Meßwiderstand 32 z.B. als Folge des Entladens parasitärer Kapazität der Wechselstromlast 3 fließen. Je größer die parasitäre Kapazität der Wechselstromlast 3 ist, desto größer wird im. Verhältnis auch die Pulsbreite der maximalen Spitzenstromimpulse werden. Es muß somit sichergestellt sein, daß der Integrator 44, 45 stets eine Zeitkonstante haben muß, die größer als die genannte Pulsbreite der maximalen Spitzenstromimpulse ist.

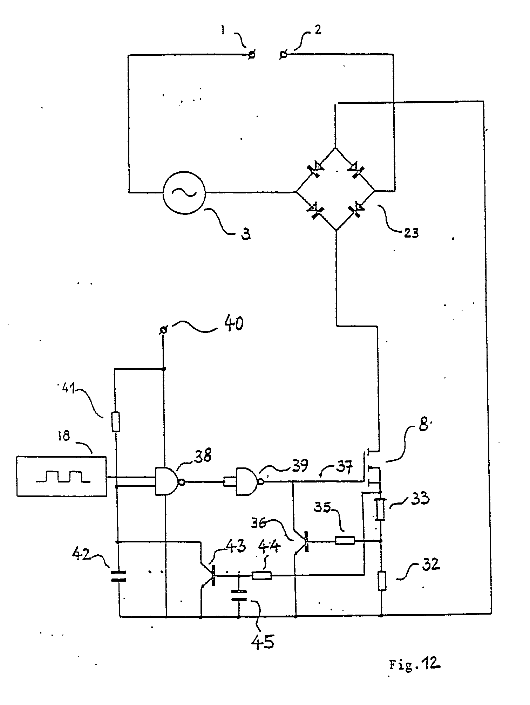

Figur 12 zeigt ein weiteres Ausführungsbeispiel der Schutzschaltungsanordnung gemäß Figur 10. jedoch mit verbessertem Kurzschlußschutz. Die Schaltungsanordnung gemäß Figur 12 unterscheidet sich von derjenigen gemäß Figur 11 nur dadurch, daß zwischen dem Halbleiterschalter 8 und dem ersten Meßwiderstand 32 ($R_M$) ein weiterer zweiter Meßwiderstand 33 ($R_G$) zwischengeschaltet ist, wobei das eingangsseitig auf den Integratorwiderstand 45 aufgeprägte Potential nicht zwischen erstem Meßwiderstand 32 und Halbleiterschalter 8, sondern zwischen zweitem Meßwiderstand 33 und Halbleiterschalter 8 abgegriffen wird. Als Halbleiterschalter 8 kann z.B. ein MOSFET-Transistor verwendet werden. Bekanntlich können solche Transistoren über eine kurze Zeit einen sehr hohen Spitzenstrom ertragen. Wird jedoch der höchst zulässige Spitzenstrom bzw. die höchst zulässige Zeit überschritten, dann wird der MOSFET-Transistor zerstört. MOSFET-Transistoren können üblicherweise einen Spitzenstrom von z.B. 10 A während mindestens 300 Mikrosekunden pro Kurzschlußfall verkraften. Damit der Halbleiterschalter 8 bei einem Kurzschlußfall nicht zerstört wird, muß das Ausschalten innerhalb des vom Hersteller angegebenen Spitzenstroms und der höchst zulässigen Zeit stattfinden, wobei bei den heutigen MOSFET-Transistoren die Spitzenstrombegrenzungsgeschwindigkeit ca. im Nano-Sekundenbereich liegt. Um den Halbleiterschalter 8 einwandfrei funktionieren zu lassen, ist es notwendig, daß die Abschaltung über den Weg G-K2-Z-L$_{II}$ (vgl. Fig. 10) so schnell wie möglich stattfindet, nachdem über den Komparator K1 eine analoge Strombegrenzung aktiviert ist. Am besten geschieht dies dadurch, daß man den Halbleiterschalter 8 im Bezug auf die erwähnte Spitzenstrombegrenzung über K1 bereits auf einem relativ niedrigen Stromniveau abschalten läßt. Dies wird durch den zusätzlichen zweiten Meßwiderstand 33 erreicht, der dafür sorgt, daß der Komparator K2 bereits auf ein niedrigeres Stromniveau anspricht als der Komparator K1. Im übrigen funktioniert die Schaltung umso besser, je weiter die Komparatoren K1, K2 in der Komparation auseinanderliegen. Dabei wird der Komparator K2 zusammen mit dem Ist-Wert-Geber G so dimensioniert, daß er immer auf einen im vorhinein festgelegten effektiven Strom anspricht, bei welchem die Sicherung abschalten muß.

Beispielhaft sei angenommen, daß der Halbleiterschalter 8 einen Spitzenstrom von 10 A verkraften kann. Dieser wird dann über den Komparator K1 analog eingestellt. Die Sicherungsschaltung soll jedoch bereits bei- 2 A ansprechen. In diesem Fall wird der Komparator K2 auf einen Spitzenwert von $I_s = 2{,}8$ A ($I_{eff} = 2$ A) dimensioniert. Der Ist-Wert-Geber G wird nun so dimensioniert, daß der Komparator K2 nicht früher als absolut notwendig anspricht. Wenn beispielsweise der Halbleiterschalter 8 während 300 Mikrosekunden einen höchst zulässigen Spitzenstrom von 10 A verkraften kann, wird der Ist-Wert-Geber G auf eine Ansprechzeit von z.B. 200 Mikrosekunden eingestellt. Wird nun die Ansprechzeit von 200 Mikrosekunden in Verbindung mit einem Spitzenstrom oder in Verbindung mit einem niedrigeren Strom, bei welchem der Komparator K1 aber noch nicht anspricht, überschritten, dann wird der Komparator K2 ansprechen, sofern der genannte Spitzenstrom $I_s = 2{,}8$ A überschritten wird. D.h. daß der drohende Überstrom sozusagen antizipiert wird und bereits im Vorfeld, d.h. während des Stromanstiegs Gegenmaßnahmen, d.h. Pulsbetrieb, getroffen werden. Spricht nun der Komparator K2 an, dann wird der Zeitformer Z einen Impuls bestimmter Pulsdauer abgeben, der über die Schaltlogik L$_{II}$ den Halbleiterschalter 8 während einer vorgegebenen Zeit sofort in den sperrenden Zustand bringt, damit das Substrat des Halbleiterschalters 8 wieder abkühlen kann. In der Praxis hat sich eine Impulszeit des Zeitformers Z von T = 100 Millisekunden als wirksam herausgestellt. Das bedeutet, daß der Halbleiterschalter 8 während der Schutzwirkung der Schaltung 10 x/Sekunde ausgeschaltet und 10x/Sekunde eingeschaltet wird.

Durch die Kombination des erfindungsgemäßen Wechselstromstellers mit einer erheblich verlustleistungsreduzierten Triac 4, 6-Ansteuerschaltung des Freilaufnetzwerkes, mit einer Halteschaltung mit automatischer cos φ -Anpassung sowie mit einer Schaltungsanordnung zum Schutz des pulsgesteuerten Wechselstromstellers gegen Überlastung und Kurzschluß ist ein geräusch und verlustarmer, sowie überaus störunanfälliger Wechselstromsteller geschaffen.

## Patentansprüche

1. Schaltungsanordnung mit einer an eine Wechselspannungsquelle (1, 2) anschließbaren, einen induktiven Anteil aufweisenden Wechselstromlast (3), mit einem elektrisch in Reihe zur Wechselstromlast (3) angeordneten gesteuerten Laststromschaltmittel (8, 23), mit einem Steuernetzwerk (75, 18) zur Steuerung des Laststromschaltmittels (8, 23) durch eine wesentlich über der Wechselspannungsfrequenz liegende Pulsfrequenz, wobei die Pulsfrequenz oder das Tastverhältnis der Steuerimpulse über ein Stellglied (S) derart verstellbar ist, daß die Wechselstromlast (3) mit einem durch die Pulsfrequenz getakteten Wechselstrom gespeist wird, sowie mit zwei parallel zur Wechselstromlast (3) liegenden, mittels Freilaufschaltmitteln (4, 5; 6, 7) abhängig vom Netzwechselspannungsnulldurchgang alternierend steuerbaren antiparallelen Freilaufzweigen, wobei während der positiven Halbwelle der Netzwechselspannung der Freilaufzweig mit dem Freilaufschaltmittel (4, 5) sperrt und der Freilaufzweig mit dem Freilaufschaltmittel (6, 7) leitet und wobei während der negativen Halbwelle der Netzwechselspannung der Freilaufzweig mit dem Freilaufschaltmittel (4, 5) leitet und der Freilaufzweig mit dem Freilaufschaltmittel (6, 7) sperrt, dadurch gekennzeichnet, daß eine Halteschaltung (13, 15) vorgesehen ist, welche das Laststromschaltmittel (8, 23) entweder unmittelbar oder mittelbar über das Steuernetzwerk (75, 18) derart beeinflußt, daß das Laststromschaltmittel (8, 23) während eines im Bereich des Nulldurchgangs der Wechselspannung liegenden Haltebereichs (H) entweder in einer geöffneten oder in einer geschlossenen Schaltstellung verbleibt, wobei eine den Haltebereich (H) begrenzende erste Haltebereichsgrenze ($H_1$) spätestens durch den Nulldurchgang der Wechselspannung und eine zweite Haltebereichsgrenze ($H_2$) frühestens durch den folgenden Nulldurchgang des nacheilenden Wechselstroms zeitlich vorgegeben ist und wobei der Haltebereich (H) mindestens denjenigen Phasenbereich $0 < \varphi_x < \varphi_1$ abdeckt, in welchem störende Induktionsspannungsimpulse auftreten.

2. Schaltungsanordnung nach Anspruch 1, dadurch gekennzeichnet, daß das Laststromschaltmittel (8, 23) einen mit seinen Wechselspannungsanschlüssen in Serie zur Wechselstromlast (3) liegenden, ungesteuerten Brückengleichrichter (23) und einen gesteuerten Halbleiterschalter (8), vorzugsweise einen Transistor aufweist, der mit seiner Schaltstrecke den Gleichspannungszweig des Brückengleichrichters (23) überbrückt.

3. Schaltungsanordnung nach einem der vorhergehenden Ansprüche, dadurch gekennzeichnet, daß die Halteschaltung (13, 15) einen Spannungsdetektor (13) und einen ersten Impulsgeber (15) aufweist, daß das dem Spannungsdetektor (13) zugeführte Eingangssignal direkt oder indirekt von der Wechselspannung der Wechselspannungsquelle abgeleitet ist und daß das vom Spannungsdetektor (13) abgegebene Ausgangssignal den Eingang des ersten Impulsgebers (15) triggert, wobei dessen Ausgang mit dem Steuernetzwerk (75, 18) des Halbleiterschalters (8), gegebenenfalls über zwischengeschaltete Bauelemente, verbunden ist.

4. Schaltungsanordnung nach Anspruch 3, dadurch gekennzeichnet, daß das dem Spannungsdetektor (13) zugeführte Eingangssignal von einem der Gleichstromanschlüsse des Brükken-Gleichrichters (23) abgenommen wird und über einen Integrator (11) geführt ist, der die Pulsfrequenz unterdrückt, so daß nur die Hüllkurve des vom Brücken-Gleichrichter (23) kommenden Signals verbleibt.

5. Schaltungsanordnung nach einem der Ansprüche 3 bis 4, dadurch gekennzeichnet, daß der erste Impulsgeber (15) bei jeder Triggerung einen Halteimpuls bestimmter Pulsbreite formt, wobei die Pulsbreite dem maximalen Haltebereich (H) entspricht und die vom Steuernetzwerk (75, 18) kommenden Steuerimpulse solange wirkungslos sind, solange der Halteimpuls andauert.

6. Schaltungsanordnung nach einem der vorhergehenden Ansprüche, dadurch gekennzeichnet, daß der dem Halbleiterschalter (8) zugeführte Halteimpuls entweder auf das Steuernetzwerk (75, 18) einwirkt und dieses an der Abgabe eines pulsierenden Steuersignals hindert oder das pulsierende Steuersignal durch Superposition ausblendet.

7. Schaltungsanordnung nach einem der vorhergehenden Ansprüche, dadurch gekennzeichnet, daß die den Beginn des Haltebereichs (H) definierende erste Haltebereichsgrenze ($H_1$) zeitlich soweit vor den Wechselspannungsnulldurchgang gelegt ist, daß dU/dt-empfindliche Bauelemente durch induktive Spannungsspitzen nicht beschädigt oder unzulässig beeinflußt werden.

8. Schaltungsanordnung nach einem der vorhergehenden Ansprüche, dadurch gekennzeichnet, daß die das Ende des Haltebereichs (H) definierende zweite Haltebereichsgrenze ($H_2$) entsprechend dem cos φ im Laststromkreis derart festgelegt ist, daß bei cos φ =1 die zweite Haltebereichsgrenze ($H_2$) frühestens in den Nulldurchgang der Spannung fällt und bei kleinerwerdendem cos φ sich nacheilend mit dem Nulldurchgang des Stroms soweit verschiebt, daß sie in diesem oder unmittelbar davor bzw. dahinter zu liegen kommt.

9. Schaltungsanordnung nach Anspruch 8, dadurch gekennzeichnet, daß eine Regelschaltung für eine automatische Anpassung der zweiten Haltebereichsgrenze ($H_2$) an den jeweiligen $\cos \varphi$ dadurch sorgt, daß in Serie zur Schaltstrecke des Halbleiterschalters (8) ein dritter Meßwiderstand (34) als Stromsensor liegt, daß der an ihm auftretende Spannungsabfall die Eingangsgröße eines Stromdetektors (46) ist, der bei $I(t) = 0$ oder $I(t) \approx 0$ an einen durch den Spannungsdetektor (13) getriggerten zweiten Impulsgeber (16) einen Rücksetzimpuls genau dann liefert, wenn der Spannungsdetektor (13) nach dem Durchlaufen eines monoton abfallenden Spannungspegels unmittelbar zuvor $U(t) = 0$ detektiert hat.

10. Schaltungsanordnung nach den Ansprüchen 5 und 9, dadurch gekennzeichnet,

daß das Potential eines Anschlusses des Gleichstromzweigs des Brückengleichrichters 23 über eine in Durchlaßrichtung gepolte Diode (51) an die Parallelschaltung eines Kondensators (55) mit einer aus einem Widerstand (52), einer Zenerdiode (53) und einem Widerstand (54) gebildeten Serienschaltung geführt wird,

daß das zwischen der Zenerdiode (53) und dem Widerstand (54) anstehende Spannungspotential den invertierenden Eingang und das zwischen den Spannungsteilerwiderständen (58, 59) eingestellte Referenzspannungssignal den nichtinvertierenden Eingang eines ersten Konparators (56) beaufschlagt, daß durch den über den Widerstand (60) mit dem nicht invertierenden Eingang verbundenen Ausgang des ersten Komparators (56) sowohl ein aus der Serienschaltung eines Kondensators (61) mit einer in Sperrichtung gepolten und mit einem Widerstand (63) überbrückten Diode (62) gebildeter erster monostabiler Multivibrator (61, 62, 63) als auch ein aus der Serienschaltung eines Kondensators (64) mit einer in Sperrichtung gepolten und mit einem Widerstand (66) überbrückten Diode (65) gebildeter zweiter monostabiler Multivibrator (64, 65, 66) parallel getriggert wird,

daß die unmittelbar hinter den Kondensatoren (61, 64) abgegriffenen Potentiale jeweils über in Durchlaßrichtung gepolte Dioden (67, 68) auf den über einen Widerstand (69) mit einem ersten Potentialabgriff (57) verbundenen Eingang eines als Inverter (70) geschalteten NAND-Gatters geleitet werden,

daß der Ausgang des Inverters (70) einen ersten Eingang eines NAND-Gatters (71) eines Pulsgenerators (18) und Stellpotentiometer (75) Netzwerks (71 bis 76) beaufschlagt und daß ein erster Anschluß des Stellpotentiometers (75) über die Reihenschaltung einer in Durchlaßrichtung gepolten Diode (73) mit einem Widerstand (72) gemeinsam mit einem über eine in Sperrichtung gepolte Diode (74) geführten zweiten Anschluß des Stellpotentiometers (75) einen zweiten Eingang des NAND-Gatters (71) beaufschlagt, wobei letzterer über einen Koppelkondensator (76) mit dem ersten Potentialabgriff (57) verbunden ist,

daß der Ausgang des NAND-Gatters (71) sowohl den Einstellkontakt des Stellpotentiometers (75) als auch die Steuerelektrode (37) des Halbleiterschalters (8) ansteuert,

daß der am zweiten Potentialabgriff (90) detektierte Eingangssignal für den Stromdetektor (46) über einen Eingangswiderstand (77) dem nichtinvertierenden Eingang eines zweiten Komparators (82) zugeführt und über einen Kondensator (80) an den ersten Potentialabgriff (57) angekoppelt ist,

daß der mit seinem nicht invertierenden Eingang über einen Kondensator (81) kapazitiv gekoppelte Ausgang des zweiten Komparators (82) über einen aus der Serienschaltung eines Kondensators (83) mit einer in Sperrichtung gepolten und mit einem Widerstand (84) überbrückten Diode (85) gebildeten dritten monostabilen Multivibrator (83, 84, 85) unmittelbar hinter dem Kondensator (83) an den invertierenden Eingang eines dritten Komparators (88) gelegt ist, wobei das für den invertierenden Eingang des zweiten Komparators (82) benötigte Referenzspannungssignal zwischen den seriengeschalteten Spannungsteilerwiderstanden (78, 79) und das für den nicht invertierenden Eingang des dritten Komparators (88) benötigte Referenzspannungssignal zwischen dem seriengeschalteten Spannungsteilerwiderstanden (86, 87) abgegriffen wird und wobei das Spannungsteilernetzwerk (78, 79, 86, 87) eingangsseitig über ein Versorgungspotential (91) gespeist und ausgangsseitig an den ersten Potentialabgriff (57) rückgeführt wird

und daß das am Ausgang des dritten Komparators (88) anstehende und über eine in Sperrichtung gepolte Diode (89) weitergeleitete Triggersignal den ersten monostabilen Multivibrator (61, 62, 63 zwischen dem Kondensator (61) und der Anode der Diode (68) triggert.

11. Schaltungsanordnung nach einem der vorhergehenden Ansprüche, dadurch gekennnzeichnet, daß in jedem der antiparallel geschalteten Freilaufzweige als Freilaufschalter (4, 6) ein Thyristor oder ein Triac liegt, dessen Schaltstrecke durch die Reihenschaltung eines RC-Gliedes (27, 26; 29, 28) parallel überbrückt ist und jeweils in Reihe zu dieser Schaltung eine Diode (5, 7) liegt, welche gegenüber der im jeweils anderen Freilaufzweig liegenden Diode (5, 7) antiparallel gepolt ist.

12. Schaltungsanordnung nach einem der vorhergehenden Ansprüche, dadurch gekennzeichnet, daß Triacs als Freilaufschalter (4, 6) dienen, deren Steuerelektroden jeweils über RD-Glieder (24, 25; 30, 31) an derselben Wechselspannungsanschlußklemme (2) der Wechselspannungsquelle liegen, wobei die Ansteuerdioden (25, 31) die beiden Steuerelektroden der Triacs gegensinnig nur während einer bestimmten Halbwelle an Spannung legen.

13. Schaltungsanordnung nach Anspruch 12, dadurch gekennzeichnet, daß zwischen den Steuerelektroden der als Freilaufschalter (4, 6) dienenden Triacs und den RD-Gliedern (24, 25;

30, 31) jeweils zusätzliche, pulsierende Triac-Ansteuerung gewährleistende Triac (4, 6)-Ansteuernetzwerke ($T_1$, $T_2$, $R_1$, $R_2$, $R_4$; $T_3$, $T_4$, $R_5$, $R_6$, $R_7$, $R_8$, $D_3$) zwischengeschaltet sind und daß für diese eine zusätzliche Speiseschaltung ($ZD_1$, $D_2$, $C_1$, $R_3$) derart vorgesehen ist, daß zwischen den Wechselspannungsanschlußklemmen (1, 2) die Reihenschaltung eines mit einer Zener-Diode ($ZD_1$) überbrückten Koppelkondensators ($C_1$), eines Widerstands ($R_3$) sowie einer Koppeldiode ($D_2$) angeordnet ist und daß die Kathode der Zener-Diode ($ZD_1$) am Potential der Wechselspannungsklemme (1) und die Kathode der Diode ($D_2$) am Potential der Wechselspannungsklemme (2) liegt.

14. Schaltungsanordnung nach Anspruch 13, dadurch gekennzeichnet, daß die Kollektoren des NPN-Transistors ($T_1$) und des PNP-Transistors ($T_2$) einerseits, die Emitter des NPN-Transistors ($T_3$) und des PNP-Transistors ($T_4$) andererseits sowie der Emitter des NPN-Transistors ($T_1$) und der Kollektor des PNP-Transistors ($T_4$) untereinander verbunden sind, daß Basis und Emitter des NPN-Transistors ($T_1$) mittels Widerstand ($R_1$), Basis und Emitter des PNP-Transistors ($T_2$) mittels Widerstand ($R_2$), Basis und Emitter des NPN-Transistors ($T_3$) mittels Widerstand ($R_6$) sowie Basis und Emitter des PNP-Transistors ($T_4$) mittels Widerstand ($R_7$) überbrückt sind, daß die Basis des NPN-Transistors ($T_1$) mit dem Widerstand (24) des RD-Glieds (24, 25) und die Basis des PNP Transistors ($T_4$) mit dem Widerstand (30) des RD-Glieds (30, 31) verbunden ist, daß das Basispotential des PNP Transistors ($T_2$) über den zugehörigen Basiswiderstand ($R_4$) an die Anode der ersten Freilaufdiode (5) und das Basispotential des NPN-Transistors ($T_3$) über den zugehörigen Basiswidertand ($R_5$) an die Kathode der zweiten Freilaufdiode (7) geführt ist, daß das Potential der Wechselspannungsklemme (1) über eine in Sperr-Richtung gepolte Diode (D3) an die Basis des NPN-Transistors ($T_3$) und über einen Widerstand ($R_8$) an die Emitter der Transistoren ($T_3$, $T_4$) geführt ist, und daß das der Speiseschaltung (ZD1, C1, R3, D2) zwischen Kondensator (C1) und Widerstand (R3) entnommene Speisepotential an den Emitter des Transistors (T1) sowie an den Kollektor des Transistors (T4) geführt wird und die jeweilige Steuerelektrode der Triacs (4, 6) durch das Emitterpotential des Transistors (T2) bzw. das Kollektorpotential des Transistors ($T_3$) angesteuert wird.

15. Schaltungsanordnung nach einem der vorhergehenden Ansprüche, dadurch gekennzeichnet, daß die vom Pulsgenerator (18) des Steuernetzwerks (75, 18) abgegebene Pulsfrequenz mehr als doppelt so hoch wie die Nennfrequenz der Wechselspannung, vorzugsweise aber größer als 16 kHz ist.

16. Schaltungsanordnung nach einem der vorhergehenden Ansprüche, dadurch gekennzeichnet, daß für den gesteuerten Halbleiterschalter (8) eine in seinem Steuerkreis liegende Schutzschaltung in Form eines Spitzenstrombegrenzungsnetzwerks (I) und eines Effektivstrombegrenzungsnetzwerks (II) vorgesehen ist, wobei bei letzterem ein Ist-Wert-Geber (G) an einen nachgeschalteten

Komparator ($K_2$) einen Ist-Wert abgibt, den er aus dem die Schaltstrecke des Halbleiterschalters (8) durchfließenden Laststrom bildet, der Komparator ($K_2$) den Ist-Wert mit einem vorgebbaren Soll-Wert vergleicht und ausgangsseitig seinen Schaltzustand ändert, sobald der Laststrom den zulässigen Effektivwert überschreitet, sowie das binäre Ausgangssignal des Komparators ($K_2$) einem Zeitformer (Z) zugeführt ist, der über eine Schaltlogik (L11) an den Steuerkreis des Halbleiterschalters (8) Sperrimpulse weitergibt, durch welche sich die Dauer der Sperrphasen des gesteuerten Halbleiterschalters (8) soweit erhöht, daß sich der Laststrom auf einen zulässigen Effektivwert reduziert.

17. Schaltungsanordnung nach Anspruch 16, dadurch gekennzeichnet, daß in Serie zur Schaltstrecke des Halbleiterschalters (8) ein erster Meßwiderstand (32) liegt, dessen an ihm auftretender Spannungsabfall die Eingangsgröße sowohl des Spitzenstrombegrenzungsnetzwerks (I) als auch des Effektivstrombegrenzungsnetzwerks (II) darstellt oder daß zusätzlich zum ersten Meßwiderstand (32) ein zweiter Meßwiderstand (33) in Reihe liegt, wobei der längs der beiden Meßwiderstände (32, 33) insgesamt auftretende Spannungsabfall die Eingangsgröße des Effektivstrombegrenzungsnetzwerks (II) sowie der längs des ersten Meßwiderstands (32) auftretende Spannungsabfall die Eingangsgröße des Spitzenstrombegrenzungsnetzwerks (I) darstellt und wobei der Komparator ($K_2$) des Effektivstrombegrenzungsnetzwerks (II) auf ein wesentlich niedrigeres Spannungsniveau anspricht, als der Komparator ($K_1$) des Spitzenstrombegrenzungsnetzwerks (I).

18. Schaltungsanordnung nach einem der Ansprüche 16 bis 17, dadurch gekennzeichnet, daß der einen Integratorwiderstand (44) und einen Integratorkondensator (45) in Tiefpaß-Vierpol-Schaltung aufweisende Ist-Wert-Geber (G) an seinem den Eingang des Komparators (K2) beaufschlagenden Ausgang einen dem arithmetischen Mittelwert des Laststroms proportionalen Ist-Wert abgibt und der Formfaktor des Laststroms über die Höhe des Sollwertes und die Dauer der Sperrimpulse berücksichtigt wird.

19. Schaltungsanordnung nach einem der Ansprüche 16 bis 18, dadurch gekennzeichnet, daß der Ausgang des Komparators ($K_2$) parallel zu einem Zeitformerkondensator (42) des Zeitformers (Z) geschaltet ist, daß der Zeitformerkondensator (42) über einen zu ihm in Reihe liegenden Zeitformerwiderstand (41) an ein Speisepotential (40) gelegt ist und daß der als Komparator ($K_2$) dienende zweite NPN-Transistor (43) mittels des am Ausgang des Ist-Wert-Gebers (G) anstehenden Ist-Wertes beim Unterschreiten bzw. beim Überschreiten eines maximalen Effektivstroms sperrend bzw. leitend durchgesteuert wird.

20. Schaltungsanordnung nach einem der Ansprüche 16 bis 19, dadurch gekennzeichnet, daß die Schaltlogik (L11) ein erstes NAND-Gatter (38) besitzt, dessen erster Eingang an einem Pulsgenerator (18) liegt und dessen zweiter Eingang mit dem Kollektorpotential des zweiten NPN-Transistors (43) verbunden ist, sowie ein am Ausgang des ersten NAND-Gatters (38) als Inverter geschaltetes zweites NAND-Gatter (39) aufweist, dessen Ausgang die Steuerelektrode (37) des Halbleiterschalters (8) beaufschlagt.

**Claims**

1. Circuit arrangement comprising an alternating current load (3), which is connectable to an alternating voltage source (1, 2) and has an inductive component, comprising a controlled load-current switching means (8, 23) arranged electrically in series to the alternating-voltage load (3), comprising a control network (75, 18) for controlling the load-current switching means (8, 23) via a pulse frequency located substantially above the alternating-voltage frequency, the pulse·frequency or the mark-space ratio of the control pulses being adjustable via a regulating unit (S) in such a way that the alternating-current load (3) is supplied with an alternating current clocked by the pulse frequency, and comprising two antiparallel freewheeling arms, which are located parallel to the alternating-current load (3) and are alternately controllable by means of freewheeling switching means (4, 5; 6, 7) depending upon the alternating-current supply voltage zero-axis crossing, it being the case that, during the positive half-wave of the alternating current supply voltage, the freewheeling arm with the freewheeling switching means (4, 5) blocks and the freewheeling arm with the freewheeling switching means (6, 7) conducts, and that, during the negative half-wave of the alternating-current supply voltage, the freewheeling arm with the freewheeling switching means (4, 5) conducts in the freewheeling arm with the freewheeling switching means (6, 7) blocks, characterized in that a holding circuit (13, 15) is provided, which either directly or indirectly influences the load-current switching means (8, 23) via the control network (75, 18) in such a way that, during a hold range (H) located in the region of the zero-axis crossing of the alternating voltage, the load current switching means (8, 23) remains either in an opened or in a closed switch position, it being the case that a first hold-range limit ($H_1$) limiting the hold range (H) is temporally predetermined at the latest by the zero-axis crossing of the alternating voltage, and a second hold-range limit ($H_2$) is temporally predetermined at the earliest by the following zero-axis crossing of the lagging alternating current, and that the hold range (H) covers at least that phase range $0 < \phi_x < \phi_1$ in which disturbing induced voltage pulses occur.

2. Circuit arrangement according to Claim 1, characterized in that the load-current switching means (8, 23) has an uncontrolled bridge rectifier (23), which is located with its alternating-voltage terminals in series with the alternating-current load (3), and a controlled semiconductor switch (8), preferably a transistor, which with its break section by-passes the direct-voltage arm of the bridge rectifier (23).

3. Circuit arrangement according to one of the preceding claims, characterized in that the holding circuit (13, 15) has a voltage detector (13) and a first pulse generator (15), in that the input signal fed to the voltage detector (13) is derived directly or indirectly from the alternating voltage of the alternating-voltage source, and in that the output signal transmitted by the voltage detector (13) triggers the input of the first pulse generator (15), the output thereof being connected to the control network (75, 18) of the semiconductor switch (8), possibly via inserted components.

4. Circuit arrangement according to Claim 3, characterized in that the input signal fed to the voltage detector (13) is tapped by one of the direct-current terminals of the bridge rectifier (23) and routed via an integrator (11), which suppresses the pulse frequency, so that only the envelope curve of the signal coming from the bridge recitifer (23) remains.

5. Circuit arrangement according to one of Claims 3 to 4, characterized in that at each triggering the first pulse generator (15) forms a holding pulse of specific pulse width, the pulse width corresponding to the maximum hold range (H), and the control pulses coming from the control network (75, 18) being ineffective for as long as the holding pulse lasts.

6. Circuit arrangement according to one of the preceding claims, characterized in that the holding pulse fed to the semiconductor switch (8) either acts upon the control network (75, 18) and prevents the latter from transmitting a pulsating control signal, or blanks out the pulsating control signal by superposition.

7. Circuit arrangement according to one of the preceding claims, characterized in that the first hold range limit ($H_1$) defining the start of the hold range (H) is located temporally so far before the alternating voltage zero-axis crossing that the Du/dt-sensitive components are not damaged or impermissibly influenced by inductive voltage peaks.

8. Circuit arrangement according to one of the preceding claims, characterized in that the second hold range limit ($H_2$) defining the end of the hold range (H) is fixed in accordance with the cos φ in the load-current circuit in such a way that for cos φ = 1 the second hold-range limit ($H_2$) falls at the earliest in the zero-axis crossing of the voltage, and as cos φ becomes smaller is displaced in a lagging fashion with the zero-axis crossing of the current so far that it comes to be located therein or immediately before or after.

9. Circuit arrangement according to Claim 8, characterized in that a control circuit ensures automatic matching of the second hold-range limit (H2) to the respective cos φ due to the fact that a third precision resistor (34) is located as current sensor in series with the break section of the semiconductor switch (8), and in that the voltage drop occurring at it is the input quantity of a current detector (46), which in the case of I(t) = 0

or $I(t) \approx 0$ delivers a reset pulse to a second pulse generator (16), triggered by the voltage detector (13), precisely when the voltage detector (13), after passing through a monotonically falling voltage level, has detected $U(t) = 0$ immediately before.

10. Circuit arrangement according to Claims 5 and 9, characterized in that the potential of a terminal of the direct-current arm of the bridge rectifier (23) is routed via a diode (51) poled in the conducting direction to the parallel connection of a capacitor (55) to a series connection formed by a resistor (52), a Zener diode (53) and a resistor (54), in that the voltage potential present between the Zener diode (53) and the resistor (54) is applied to the inverting input and the reference voltage signal set between the voltage divider resistors (58, 59) is applied to the non-inverting input of a first comparator (56), in that via the output of the first comparator (56), which output is connected via the resistor (60) to the non-inverting input, there are triggered in parallel both a first monostable multivibrator (61, 62, 63), which is formed from the series connection of a capacitor (61) to a diode (62) that is poled in the reverse direction and by-passed by a resistor (63), and a second monostable multivibrator (64, 65, 66), which is formed from the series connection of a capacitor (64) to a diode (65) that is poled in the reverse direction and by-passed by a resistor (66), in that the potentials tapped immediately behind the capacitors (61, 64) are conducted, via diodes (67, 68) poled in the conducting direction in each case, to the input of a NAND gate connected as an inverter (70), which input is connected via a resistor (69) to a first potential tap (57), in that the output of the inverter (70) is applied to a first input of a NAND gate (71) of a pulse generator (18) and regulating potentiometer (75) network (71 to 76), and in that a first terminal of the regulating potentiometer (75) is applied via the series connection of a diode (73), poled in the conducting direction, with a resistor (72), and in common with a second terminal of the regulating potentiometer (75), routed via a diode (74) poled in the reverse direction, to a second input of the NAND gate (71), the latter being connected via a coupling capacitor (76) to the first potential tap (57), in that the output of the NAND gate (71) triggers both the setting contact of the regulating potentiometer (75) and the gate electrode (37) of the semiconductor switch (8), in that the input signal, detected at the second potential tap (90), for the current detector (46) is fed via an input resistor (77) to the non-inverting input of a second comparator (82) and coupled via a capacitor (80) to the first potential tap (57), in that the output of the second comparator (82) is capacitively coupled with its non-inverting input via a capacitor (81) and is connected immediately behind the capacitor (83) to the inverting input of a third comparator (88) via a third monostable multivibrator (83, 84, 85) formed from the series connection of a capacitor (83) with a diode (85) that is poled in the reverse direction and by-passed by a resistor (84), it being the case that the reference voltage signal required for the inverting input of the second comparator (82) is tapped between the series-connected voltage divider resistors (78, 79), and the reference voltage signal required for the non-inverting input of the third comparator (88) is tapped between the series-connected voltage divider resistors (86, 87), and that the voltage divider network (78, 79, 86, 87) is supplied on the input side via a supply potential (91), and is fed back on the output side to the first potential tap (57), and in that the trigger signal that is present at the output of the third comparator (88) and is transmitted via a diode (89) poled in the reverse direction triggers the first monostable multivibrator (61, 62, 63) between the capacitor (61) and the anode of the diode (68).

11. Circuit arrangement according to one of the preceding claims, characterized in that there is located as freewheeling switch (4, 6) in each of the antiparallel connected freewheeling arms a thyristor or a triac of which the break section is by-passed in parallel via the series connection of an RC element (27, 26; 29, 28), and a diode (5, 7), which is poled antiparallel in relation to the diode (5, 7) located in the respective other freewheeling arm, is located in series with this circuit in each case.

12. Circuit arrangement according to one of the preceding claims, characterized in that triacs serve as freewheeling switches (4, 6) of which the gate electrodes are connected via RD elements (24, 25; 30, 31) in each case to the same alternating-voltage supply terminal (2) of the alternating-voltage source, the trigger diodes (25, 31) connecting the two gate electrodes of the triacs to voltage in opposition only during a specific half-wave period.

13. Circuit arrangement according to Claim 12, characterized in that additional, pulsating triac (4, 6) trigger networks ($T_1, T_2$, $R_1, R_2, R_4$; $T_3, T_4$, $R_5, R_6, R_7, R_8$, $D_3$) that guarantee triac triggering are inserted in each case between the gate electrodes of the triacs, which serve as freewheeling switches (4, 6), and the RD elements (24, 25; 30, 31) and in that an additional supply circuit ($ZD_1$, $D_2$, $C_1$, $R_3$) is provided for said trigger networks in such a way that there is arranged between the alternating-voltage supply terminals (1,2) a series connection of a coupling capacitor ($C_1$), by-passed by a Zener diode ($ZD_1$), of a resistor ($R_3$), and of a coupling diode ($D_2$), and in that the cathode of the Zener diode ($ZD_1$) is connected to the potential of the alternating voltage terminal (1), and the cathode of the diode ($D_2$) is connected to the potential of the alternating voltage terminal (2).

14. Circuit arrangement according to Claim 13, characterized in that the collectors of the NPN transistor ($T_1$) and of the PNP transistor ($T_2$), on the one hand, the emitters of the NPN transistor ($T_3$) and of the PNP transistor ($T_4$), on the other hand, and the emitter of the NPN transistor ($T_1$) and the collector of the PNP transistor ($T_4$) are connected to one another, in that base and emitter of the NPN transistor ($T_1$) are by-passed by means of resistor ($R_1$), base and emitter of the PNP transistor ($T_2$) are by-passed by means of resistor ($R_2$), base and emitter of the NPN transistor ($T_3$) are by-passed by means of resistor ($R_6$), and base and emitter of the PNP transistor ($T_4$) are by-passed by means of resistor ($R_7$), in that the base of the NPN transistor ($T_1$) is connected to the resistor (24) of the RD element (24, 25) and the base of the PNP transistor ($T_4$) is connected to the resistor (30) of the RD element (30, 31), in that the base potential of the PNP transistor (T2) is routed via the associated base resistor ($R_4$) to the anode of the first freewheeling diode (5) and the base potential of the NPN transistor ($T_3$) is routed via the associated base resistor ($R_5$) to the cathode of the second freewheeling diode (7), in that the potential of the alternating-voltage terminal (1) is routed via a diode (D3) poled in the reverse direction to the base of the NPN transistor ($T_3$) and via a resistor ($R_8$) to the emitters of the transistors ($T_3$, $T_4$), and in that the supply potential tapped from the supply circuit (Zdl, C1, R3, D2) between capacitor (C1) and resistor (R3) is routed to the emitter of the transistor (T1) and to the collector of the transistor (T4), and the respective gate electrode of the triacs (4, 6) is triggered by the emitter potential of the transistor (T2) or the collector potential of the transistor (T3).

15. Circuit arrangement according to one of the preceding claims, characterized in that the pulse frequency transmitted by the pulse generator (18) of the control network (75, 18) is more than twice as high as the nominal frequency of the alternating voltage, but is preferably greater than 16 Khz.

16. Circuit arrangement according to one of the preceding claims, characterized in that there is provided for the controlled semiconductor switch (8) a protective circuit, located in its control circuit, in the form of a peak current limiting network (I) and of an r.m.s. current limiting network (II), in the case of the latter an actual-value sensor (G) transmitting to a downstream comparator ($K_2$) an actual value which it forms from the load current flowing through the break section of the semiconductor switch (8), the comparator ($K_2$) comparing the actual value with a predeterminable desired value and changing its circuit state on the output side as soon as the load current exceeds the permissible r.m.s. value, and the binary output signal of the comparator ($K_2$) being fed to a time former (Z), which transmits to the control circuit of the semiconductor switch (8) via a switching logic (L11) blocking pulses through which the duration of the blocking phases of the controlled semiconductor switch (8) is increased so far that the load current is reduced to a permissible r.m.s. value.

17. Circuit arrangement according to Claim 16, characterized in that there is located in series with the break section of the semiconductor switch (8) a first precision resistor (32), of which the voltage drop occurring thereat represents the input quantity both of the peak current limiting network (I) and of the r.m.s. current limiting network (II), or in that a second precision resistor (33) is located in series in addition to the first precision resistor (32), the voltage drop occurring overall along the two precision resistors (32, 33) representing the input quantity of the r.m.s. current limiting network (II), and the voltage drop occurring along the first precision resistor (32) representing the input quantity of the peak current limiting network (I), and the comparator ($K_2$) of the r.m.s. current limiting network (II) responding to a substantially lower voltage level than the comparator ($K_1$) of the peak current limiting network (I).

18. Circuit arrangement according to one of Claims 16 to 17, characterized in that the actual-value sensor (G), which has an integrator resistor (44) and an integrator capacitor (45) in a low-pass four-poled circuit, transmits an actual value proportional to the arithmetic mean of the load current at its output which is applied to the input of the comparator ($K_2$), and the form faktor of the load current is taken into account via the level of the desired value and the duration of the blocking pulses.

19. Circuit arrangement according to one of Claims 16 to 18, characterized in that the output of the comparator ($K_2$) is connected in parallel to a time former capacitor (42) of the time former (Z), in that the time former capacitor (42) is connected to a supply potential (40) via a time former resistor (41) located in series with it, and in that the second NPN transistor (43) serving as comparator ($K_2$) is driven by means of the actual value present at the output of the actual-value sensor (G) to block or conduct respectively upon undershooting or overshooting of a maximum r.m.s. current.

20. Circuit arrangement according to one of Claims 16 to 19, characterized in that the switching logic (L11) has a first NAND gate (38), of which the first input is connected to a pulse generator (18) and of which the second input is connected to the collector potential of the second NPN transistor (43), and has a second NAND gate (39), which is connected as an inverter at the output of the first NAND gate (38) and of which the output is applied to the gate electrode (37) of the semiconductor switch (8).

**Revendications**

1. Agencement de circuit comprenant une charge de courant alternatif (3) présentant une composante inductive et susceptible d'être reliée à une source de tension alternative (1, 2), un moyen de commutation de courant de charge (8, 23) commandé disposé électriquement en série avec la charge de courant alternatif (3), un réseau de commande (75, 18) pour commander le moyen de commutation de courant de charge (8, 23) par une fréquence d'impulsions située sensiblement au-dessus de la fréquence de tension alternative, la fréquence d'impulsions ou le rapport cyclique des impulsions de commande étant réglable en passant par un organe de réglage (8) de telle manière que la charge de courant alternatif (3) soit alimentée avec un courant, alternatif rythmé par la fréquence d'impulsions, ainsi que deux branches de libre circulation tête-bêche, montées en parallèle avec la charge de courant alternatif (3) et susceptibles d'être commandées en alternance à l'aide de moyens de commutation de libre circulation (4, 5; 6, 7) en fonction du passage par zéro de la tension alternative du réseau, la branche de libre circulation contenant le moyen de commutation de libre circulation (4, 5) étant bloquée et la branche de libre circulation contenant le moyen de commutation de libre circulation (6, 7) étant conductrice pendant l'alternance positive de la tension alternative du réseau et la branche de libre circulation contenant le moyen de commutation de libre circulation (4, 5) étant conductrice et la branche de libre circulation contenant le moyen de commutation de libre circulation (6, 7) étant bloquée pendant l'alternance négative de la tension alternative du réseau, caractérisé par le fait qu'il est prévu un circuit de maintien (13, 15) qui agit sur le moyen de commutation de courant de charge (8,23), soit directement, soit indirectement en passant par le réseau de commande (75, 18), de telle manière que le moyen de commutation de courant de charge (8, 23) subsiste pendant une zone de maintien (H) située dans la zone du passage par zéro de la tension alternative, soit dans une position de commutation ouverte, soit dans une position de commutation fermée, une première limite de zone de maintien $(H_1)$ délimitant la zone de maintien (H) étant préétablie du point de vue temps au plus tard par le passage par zéro de la tension alternative et une deuxième limite de zone de maintien $(H_2)$ étant préétablie du point de vue temps au plus tôt par le passage par zéro suivant du courant alternatif en retard sur la tension alternative, et la zone de maintien (H) recouvrant au moins la zone de phase $0 < \phi_x < \phi_1$ dans laquelle apparaissent des impulsions de tension inductives perturbatrices.

2. Agencement de circuit suivant la revendication 1, caractérisé par le fait que le moyen de commutation de courant de charge (8, 23) présente un redresseur en pont (23) non commandé qui, par ses connexions de tension alternative, est en série avec la charge de courant alternatif (3), et un commutateur à semi-conducteur (8) commandé, de préférence un transistor, dont la jonction de commutation shunte la branche de tension continue du redresseur en pont (23).

3. Agencement de circuit suivant l'une des revendications précédentes, caractérisé par le fait que le circuit de maintien (13, 15) présente un détecteur de tension (13) et un premier générateur d'impulsions (15), que le signal d'entrée amené au détecteur de tension (13) est dérivé directement ou indirectement de la tension alternative de la source de tension alternative et que le signal de sortie émis par le détecteur de tension (13) déclenché l'entrée du premier générateur d'impulsions (15), la sortie de ce dernier étant reliée au réseau de commande (75, 18) du commutateur à semi-conducteur (18), le cas échéant en passant par des composants intermédiaires.

4. Agencement de circuit suivant la revendication 3, caractérisé par le fait que le signal d'entrée amené au détecteur de tension (13) est prélevé sur l'une des connexions de courant continu du redresseur en pont (23) et passe par un intégrateur (11) qui supprime la fréquence d'impulsions, en ne laissant subsister que la courbe enveloppe du signal venant du redresseur en pont (23).

5. Agencement de circuit suivant l'une des revendications 3 à 4, caractérisé par le fait que le premier générateur d'impulsions (15) forme, à chaque déclenchement, une impulsion de maintien de largeur d'impulsion déterminée, la largeur d'impulsion correspondant à la zone de maintien maximale (H) et les impulsions de commande venant du réseau de commande (75, 18) restant sans effet tant que dure l'impulsion de maintien.

6. Agencement de circuit suivant l'une des revendications précédentes, caractérisé par le fait que l'impulsion de maintien est amenée à l'interrupteur à semi-conducteur (8) ou bien agit sur le réseau de commande (75, 18) et empêche ce dernier d'émettre un signal de commande pulsatoire, ou bien élimine le signal de commande pulsatoire par superposition.

7. Agencement de circuit suivant l'une des revendications précédentes, caractérisé par le fait que la première limite de zone de maintien $(H_1)$ définissant le début de la zone de maintien (H) est située dans le temps en avant du passage par zéro de la tension alternative d'une valeur telle que des composants sensibles à dU/dt ne soient pas endommagés ou influencés de façon inadmissible par des impulsions de tension inductives.

8. Agencement de circuit suivant l'une des revendications précédentes, caractérisé par le fait que la deuxième limite de zone de maintien $(H_2)$ définissant la fin de la zone de maintien (H) est déterminée, en fonction du cos φ dans le circuit de courant de charge, de telle manière que lorsque cos φ = 1, la deuxième limite de zone de maintien $(H_2)$ tombe au plus tôt au passage par zéro de la tension et, lorsque cos φ diminue, se trouve décalée en retard avec le passage par zéro du courant de manière à se situer au passage par zéro ou immédiatement devant ou derrière.

9. Agencement de circuit suivant la revendication 8, caractérisé par le fait qu'un circuit de régulation assure une adaptation automatique de la deuxième limite de zone de maintien $(H_2)$ au cos φ respectif par le fait qu'une troisième résistance de mesure (34) se trouve disposée, en tant que capteur de courant, en série avec la jonction de commutation de l'interrupteur à semi-conducteur (8), que la chute de tension se produisant dans cette résistance constitue la grandeur d'entrée d'un détecteur de courant (46) qui, lorsque I (t) = O ou I (t) ≈ 0, envoie une impulsion de remiec en position à un deuxième générateur d'impulsions (16), déclenché par le détecteur de tension (13), exactement lorsque le détecteur de tension (13) après un niveau de tension diminuant de façon monotone, à détecté immédiatement avant U (t) = 0.

10. Agencement de circuit suivant les revendications 5 et 9, caractérisé par le fait que le potentiel d'une connexion de la branche à courant continu du redresseur en pont (23) est appliqué, en passant par une diode (53) polarisée dans le sens passant, au montage en parallèle d'un condensateur (55) et d'un montage série d'une résistance (52), d'une diodo Zener (53) et d'une résistance (54),

que le potentiel de tension entre la diode Zener (53) et la résistance (54) est appliqué à l'entrée inverseuse et le signal de tension de référence établi entre les résistances de division de tension (58, 59) est appliqué à l'entrée non inverseuse d'un premier comparateur (56), que la sortie du premier comparateur (56) reliée par la résistance (60) à l'entrée non inverseuse, déclenche en parallèle aussi bien un premier multivibrateur monostable (61, 62, 63) formé du montage en série d'un condensateur (61) et d'une diode (62) shuntée par une résistance (63) et montée dans le sens inverse, qu'un deuxième multivibrateur monostable (64, 65, 66) formé du montage en série d'un condensateur (64) et d'une diode (65) shuntée à l'aide d'une résistance (66) et montée dans le sens inverse,

que les potentiels recueillis directement derrière les condensateurs (61, 64) sont appliqués, chaque fois en passant par des diodes (67, 68) polarisées dans le sens passant, à l'entrée, reliée par une résistance (69) à une première prise de potentiel (57), d'une porte NON-ET montée en tant qu'inverseur (70),

que la sortie de l'inverseur (70) agit sur une première entrée d'une porte NON-ET (71) d'un réseau (71 à 76) de générateur d'impulsions (18) et de potentiomètre de réglage (75) et qu'une première connexion du potentiomètre de réglage (75) est reliée par un montage en séries d'une diode (73) montée dans le sens passant et d'une résistance (72), conjointement avec une deuxième connexion du potentiomètre de réglage (75), passant par une diode (74) montée dans le sens inverse, à une deuxième entrée de la porte NON-ET (71), cette entrée étant reliée par un condensateur de couplage (76) à la première prise de potentiel (57),

que la sortie de la porte NON-ET (74) commande aussi bien le contact de réglage du potentiomètre de réglage (75) que l'électrode de commande (37) du commutateur à semi-conducteur (8),

que le signal d'entrée pour le détecteur de courant (46), détecté sur la deuxième prise de potentiel (90), est appliquée par une résistance d'entrée (77) à l'entrée non inverseuse d'un premier comparateur (82) et est couplé par un condensateur (80) à la première prise de potentiel (57),

que la sortie du deuxième comparateur (82), couplée de façon capacitive à son entrée non inverseuse en passant par un condensateur (81), est reliée, en passant par un troisième multivibrateur monostable (83, 84, 85) formé du montage en série d'un condensateur (83) et d'une diode (85) montée dans le sens inverse et shuntée par une résistance (84), directement derrière le condensateur (83) à l'entrée inverseuse d'un troisième comparateur (88), le signal de tension de référence nécessaire pour l'entrée inverseuse du deuxième comparateur (82) étant recueilli entre les résistances de diviseur de tension (78, 79) montées en série, le signal de tension de référence nécessaire pour l'entrée non inverseuse du troisième comparateur (88) étant recueilli entre les résistances de diviseur de tension (86, 87) montées en série, et le réseau de diviseur de tension (78, 79, 86, 87) étant alimenté côté entrée par un potentiel d'alimentation (91) et étant couplé côté sortie sur la première prise de potentiel (57),

et que le signal de déclenchement (61, 62, 63) recueilli à l'entrée du troisième comparateur (88) et transmis par une diode (89) montée en sens inverse déclenche le premier multivibrateur monostable (61, 62, 63) entre le condensateur (61) et l'anode de la diode (68).

11. Agencement de circuit suivant l'une des revendications précédentes, caractérisé par le fait que chacune des branches de libre circulation montées tête-bêche comporte, en tant que commutateur de libre circulation (4, 6), un tyristor ou un triac dont la jonction de commutation est shuntée en parallèle par le montage en série d'un élément RC (27, 26; 29, 28) et qu'en série avec chacun de ces montages se trouve une diode (5, 7) qui est montée tête-bêche par rapport à la diode (5, 7) se trouvant dans l'autre branche de libre circulation.

12. Agencement de circuit suivant l'une des revendications précédentes, caractérisé par le fait que des triacs sont utilisés comme commutateurs de libre circulation (4, 6), dont les électrodes de commande sont reliées par des éléments RD (24, 25; 30, 31) à la même borne de connexion de tension alternative (2) de la source de tension alternative, les diodes de commande (25, 31) mettant les deux électrodes de commande des triacs sous tension en sens opposé uniquement pendant une alternance déterminée.

13. Agencement de circuit suivant la revendication 12, caractérisé par le fait qu'entre les électrodes de commande des triacs servant de commutateur de libre circulation (4, 6) et les éléments RD (24, 25; 30, 31) sont intercalées des réseaux de commande ($T_1$, $T_2$, $R_1$, $R_2$, $R_4$; $T_3$, $T_4$, $R_5$, $R_6$, $R_7$, $R_8$, $D_3$) supplémentaires pour les triacs (4, 6), assurant une commande par impulsions des triacs, et qu'il est prévu pour ces réseaux un circuit d'alimentation supplémentaire ($ZD_1$, $D_2$, $C_1$, $R_3$) de telle manière qu'ente les bornes de connexion de tension alternative (1, 2) est disposé le montage en série d'un condensateur de couplage ($C_1$) shunté par une diode Zener ($ZD_1$), d'une résistance ($R_3$) ainsi que d'une diode de couplage ($D_2$) et que la cathode de la diode Zener ($ZD_1$) se trouve au potentiel de la borne de tension alternative (1) et la cathode de la diode ($D_2$) au potentiel de la borne de tension alternative (2).

14. Agencement de circuit suivant la revendication 13, caractérisé par le fait que les collecteurs du transistor NPN ($T_1$) et du transistor PNP ($T_2$), d'une part, les émetteurs du transistor NPN ($T_3$) et du transistor PNP ($T_4$), d'autre part, ainsi que l'émetteur du transistor NPN (T$_1$) et le collecteur du transistor PNP (T$_4$) sont reliée entre eux, que la base et l'émetteur du transistor (NPN (T$_1$) sont shuntés au moyen de la résistance (R$_1$), la base et l'émetteur du transistor PNP (T$_2$) à l'aide de la résistance (R$_2$), la base et l'émetteur du transistor NPN (T$_3$) au moyen de la résistance (R$_6$) ainsi que la base et l'émetteur du transistor PNP (T$_4$) au moyen de la résistance (R$_7$), que la base du transistor NPN (T$_1$) est reliée à la résistance (24) de l'élément RD (24, 25) et la base du transistor PNP (T$_4$) est reliée à la résistance (30) de l'élément RD (30, 31), que le potentiel de base du transistor PNP (T$_2$) est appliqué par la résistance de base correspondante (R$_4$) à l'anode de première diode de libre circulation (5) et le potentiel de base du transistor NPN (T$_3$) est appliqué par le résistance de base correspondant (R$_5$) à la cathode de la deuxième diode de libre circulation (7), que le potentiel de la borne de tension alternative (1) est appliqué par une diode (D$_3$) montée dans le sens inverse à la base du transistor NPN (T$_3$) et par une résistance (R$_8$) aux émetteurs des transistors (T$_3$, T$_4$), et que le potentiel d'alimentation prélevé sur le circuit d'alimentation (ZD$_1$, C$_1$, R$_3$, D$_2$) entre le condensateur (C$_1$) at la résistance (R$_3$) est appliqué à l'émetteur du transistor (T$_1$) ainsi qu'au collecteur du transistor (T$_4$) et l'électrode de commande de chacun des triacs (4, 6) est commandée par le potentiel d'émetteur du transistor (T$_2$) et le potentiel de collecteur du transistor (T$_3$).

15. Agencement de circuit suivant l'une des revendications précédentes, caractérisé par le fait que la fréquence d'impulsions fournie par le générateur d'impulsions (18) du réseau de commande (75, 18) est plus de deux fois plus élevée que la fréquence nominale de la tension alternative, mais est de préférence supérieure à 16 kHz.

16. Agencement de circuit suivant l'une des revendications précédentes, caractérisé par le fait que pour le commutateur à semi-conducteur (8) commandé, il est prévu un circuit de protection monté dans le circuit de commande de ce dernier, sous la forme d'un réseau de limitation de courant de pointe (II) et d'un réseau de limitation de courant effectif (II), et dans ce dernier un émetteur de valeur réelle (G) émet, à un comparateur (K$_2$) suivant, une valeur réelle qu'il forme à partir du courant de charge traversant la jonction de commutation du commutateur à semi-conducteur (8), le comparateur (K$_2$) compare la valeur réelle avec une valeur de consigne susceptible d'être prédéfinie et modifie, côté sortie, son étant de commutation dès que le courant de charge a dépassé la valeur effective admissible, et le signal de sortie binaire du comparateur (K$_2$) est envoyé à un formeur (Z) qui, par une logique de commutation (L$_{II}$) transmet au circuit de commande du commutateur à semi-conducteur (8) des impulsions de blocage par lesquelles la durée des phases de blocage du commutateur à semi-conducteur (8) commandé se trouve accrue à tel point que le courant de charge soit réduit à la valeur effective admissible.

17. Agencement de circuit suivant la revendication 16, caractérisé par le fait qu'en séries avec la jonction de commutation du commutateur à semi-conducteur (8) est montée une première résistance de mesure (32) dont la chute de tension représente la grandeur d'entrée aussi bien du réseau de limitation du courant de pointe (II) que de réseau de limitatif de courant effectif (II) ou que, en plus, une deuxième résistance de mesure (33) est montée en série avec la première résistance de mesure (32), la chute de tension totale apparaissant sur les deux résistances de mesure (32, 33) représentant la grandeur d'entrée du réseau de limitation de courant effectif (II) et la chute de tension apparaissant sur la première résistance de mesure (32) représentant la grandeur d'entrée du réseau de limitation de courant de pointe (II), et le comparateur (K$_2$) du réseau de limitation de courant effectif (II) répondant à un niveau de tension sensiblement plus faible que le comparateur (K$_1$) du réseau de limitation de courant de pointe (I).

18. Agencement de circuit suivant l'une des revendications 16 à 17, caractérisé par le fait que l'émetteur de valeur réelle (G) présentant une résistance d'intégrateur (44) et un condensateur d'intégrateur (45) en montage quadripôle passe-bas émet, à sa sortie agissant sur l'entrée du comparateur (K$_2$), une valeur réelle proportionnelle à la valeur moyenne arithmétique du courant de charge, le facteur de forme du courant de charge intervenant dans la valeur de consigne et dans la durée des impulsions de blocage.

19. Agencement de circuit suivant l'une des revendications 16 à 18, caractérisé par le fait que la sortie du comparateur (K$_2$) est montée en parallèle avec un condensateur de formeur (42) du formeur (Z), que le condensateur de formeur (42) reçoit un potentiel d'alimentation (40) en passant par une résistance de formeur (41) en série avec lui et que le deuxième transistor NPN (43) servant de comparateur (K$_2$) est commandé dans le sens bloquant ou passant au moyen de la valeur réelle se trouvant à la sortie du générateur de valeur réelle (G) lors du dépassement vers le bas ou vers le haut d'un courant effectif maximal.

20. Agencement de circuit suivant l'une des revendications 16 à 19, caractérisé par le fait que la logique de commutation (L$_{II}$) présente une première porte NON-ET (38) dont la première entrée est reliée à un générateur d'impulsions (18) et dont la deuxième entrée est reliée au potentiel de collecteur du deuxième transistor NPN (43) ainsi qu'une deuxième porte NON-ET (39) qui est reliée à la sortie de la première porte NON-ET (38) en tant qu'inverseur et dont la sortie attaque l'électrode de commande (37) du commutateur à semi-conducteur (8).

EP 0 221 574 B1

FIG.1

FIG.2

1

FIG.3

FIG.4

Fig.5

Fig.6

Fig. 7

Fig. 8

Fig. 9

Fig.10

Fig. 11.

Fig.12